# EUROPÄISCHE PATENTSCHRIFT

(11) **EP 3 670 611 B1**
(45) Veröffentlichungstag und Bekanntmachung des Hinweises auf die Patenterteilung: **10.03.2021**
(21) Anmeldenummer: 18000979.7
(22) Anmeldetag: 18.12.2018
(51) Int. Cl.: C09D 5/00

(54) **KORROSIONSSCHUTZMITTEL ZUR HOHLRAUMKONSERVIERUNG UND DESSEN VERWENDUNG**
CORROSION INHIBITOR FOR CAVITY SEALING AND USE OF SAME
AGENT ANTICORROSION DESTINÉ À LA CONSERVATION DES CAVITÉS ET SON UTILISATION

(43) Veröffentlichungstag der Anmeldung: 24.06.2020
(73) Patentinhaber: Fuchs Petrolub SE, 68169 Mannheim (DE)
(72) Erfinder: LOSCH, Achim, 67593 Westhofen (DE)
(74) Vertreter: Mehl-Mikus, Claudia

(56) Entgegenhaltungen:
- EP-A1- 2 865 723
- CN-A- 107 151 376
- DE-A1- 4 240 810
- DE-A1-102008 011 489

## Beschreibung

Die Erfindung betrifft ein Korrosionsschutzmittel zur Hohlraumkonservierung und dessen Verwendung.

Aus dem Stand der Technik ist bekannt, dass insbesondere Karosseriehohlräume und das Fahrgestell von Kraftfahrzeugen, die im Verlauf des Fahrzeugbetriebs Wasser bzw. feuchter und salzhaltiger Umgebungsluft ausgesetzt sind, mit einem Korrosionsschutzmittel vor Korrosion zu schützen sind. Hohlräume im Kraftfahrzeug, die vor Korrosion zu schützen sind, liegen beispielsweise in den Schwellern, den Säulen, den Türen und bei den Kotflügeln bzw. Radgehäusen vor.

Zur Hohlraumversiegelung wird ein Hohlraumkonservierungsmittel mit einer guten Kriechfähigkeit in die Hohlräume eingebracht, das auch in Ritzen und Falze eindringt, um über Teile oder über die gesamte Hohlraumoberfläche eine dauerhaft wasserabweisende Schutzschicht auszubilden. Dabei wird das flüssige Konservierungsmittel beispielsweise mittels einer durch eine Ablauföffnung eingeführte Sprühlanze oder spezielle Sprühdüsen in gesonderten Öffnungen in den Hohlraum eingesprüht und in die Ritzen und Falze kriechen gelassen. Nach einer gewissen Zeit verfestigt sich das flüssige Konservierungsmittel, wozu gegebenenfalls eine Erwärmung für die Stabilisierung des gebildeten Korrosionsschutzfilms erforderlich ist.

Dabei ist im Herstellungsprozess von Kraftfahrzeugen eine schnelle Verfestigung erforderlich, so dass während der auf die Hohlraumversiegelung folgenden Prozessschritte kein Hohlraumkonservierungsmittel austritt, das einerseits Verschmutzungen am Bauteil und damit aufwändige Reinigungsarbeiten verursachen kann, die etwa vor einer Lackierung des Bauteils oder der Ausgabe des fertigen Fahrzeugs durchzuführen sind. Andererseits kann austretendes Hohlraumkonservierungsmittel zu Verschmutzungen des Hallenbodens führen, die neben einem erhöhten Reinigungsaufwand mit erhöhter Unfallgefahr für die Werker verbunden sind.

Ferner soll der durch das ausgehärtete Konservierungsmittel gebildete Schutzfilm eine gewisse Flexibilität und Fließfähigkeit aufweisen, um Bauteilbewegungen oder Volumenänderungen des Hohlraums infolge temperaturbedingter Wärmeausdehnungen auszugleichen.

Sogenannte Full-Solid-Wachse, die keine Verdünnung durch Lösemittel oder Wasser aufweisen, können wärmeaktive Additive enthalten, bei denen es sich z. B. um dispergierte Partikel aus festen Polymeren oder Wachsen mit einem niedrigen Erweichungspunkt handelt. Nach dem Einsprühen und Verteilen in den Hohlraum wird das Bauteil erhöhten Temperaturbedingungen ausgesetzt, wodurch die wärmeaktiven Additive ganz oder teilweise in Lösung gehen. Nach dem Erkalten geliert das Hohlraumkonservierungsmittel, so dass es während der nachfolgenden Prozessschritte nicht mehr ausfließen kann, während die eigentliche Aushärtung durch eine spätere chemische Vernetzungsreaktion stattfindet.

Die JP 2009 208 015 beschreibt eine Korrosionsschutzbehandlung für eine Karosserie, bei der die Applikation eines Wachses, das ein solches Drop-Stopp-Additiv, ein thixotropes Mittel des Erwärmungstyps, enthält, auf einen korrosionsschutzbehandelten Bereich der Karosserie erfolgt, wobei das durch Erhitzen verflüssigte Wachs in die Engstelle der Karosserie penetrieren gelassen, eingedickt und abkühlen gelassen wird. Weiteres Erhitzen des Wachses führt dann nicht mehr zu einer Viskositätsverringerung, so dass das Wachs in der Engstelle verbleibt.

Aus DE 10 2008 011 489 A1 ist ein Hohlraumkonservierungsmittel bekannt, das ohne Erwärmen verfestigt. Diesem Hohlraumkonservierungsmittel wird eine vernetzbare Komponente (Alkydharze, Acrylharze, Polyester, native und synthetische Öle und Harze mit OH-Funktionalität, oxidierte Wachse und Petrolate, vorzugsweise Rizinusöl) in einer Menge von 5 bis 15 Gewichtsanteilen bezogen auf das gebrauchsfertige Hohlraumkonservierungsmittel zugemischt, dem eine vernetzende Komponente beigemischt wurde. Die vernetzende Komponente (Amine, Peroxide, Isocyanate, vorzugsweise Diisocyanate) liegt in einer Menge von 0,1 bis 10 Gewichtsanteilen vor, sodass sich das Hohlraumkonservierungsmittel nach dem Eindringen in das Kraftfahrzeugbauteil und dem austropfen Lassen von überschüssigem Hohlraumkonservierungsmittel aus dem Kraftfahrzeugbauteil zu einer gelartigen Konsistenz verfestigt und dann aushärtet. Das zugrunde liegende Hohlraumkonservierungsmittel kann dabei Korrosionsschutzadditive, wie Calciumsulfonat, oxidativ vernetzende Bindemittel, wie Alkydharze, Flexibilisatoren, wie Mineralöl, Füllstoffe, wie Talkum, rheologische Additive, wie beispielsweise anorganische Verdicker, z. B. Bentonite, organische oder anorganische Basen, die ebenfalls zum Korrosionsschutz beitragen, wie beispielsweise Triethylendiamin, Katalysatoren für die oxidative Härtung des Bindemittels, wie Mangansalze, und weitere Additive wie beispielsweise 2-Butanonoxim aufweisen, z. B. um zu verhindern, dass sich beim Stehenlassen eine Haut bildet.

DE 42 40 810 A1 offenbart ein Beschichtungsmittel auf Basis von Wachsen, wachsartigen Verbindungen, trocknenden Ölen oder Alkydharzen, deren Ablaufverhalten durch eine Mischung eines Polymerpulvers und eines Weichmachers verbessert wird, die_bei erhöhter Temperatur gelieren. Das Beschichtungsmittel aus Vergleichsbeispiel 1 hat etwa 60% Festkörpergehalt und eine Viskosität von 80 mPa und besteht aus einer Harzlösung und einer Mahlpaste, die miteinander homogen vermischt werden:
23.6 Teile Kohlenwasserstoffharz aus Vinyltoluol/Styrol/Inden
4.0 Teile oxidiertes Petrolatum, Säurezahl 50
4.0 Teile Mischung aus Mikro-Paraffinwachs- und Gatsch, Erstarrungspunkt ca. 65°C
1.1 Teile saures Alkyl-aryl-Polyglycoletherphosphat
2.2 Teile Mischung von Fettsäurealkanolamiden
33.1 Teile Testbenzin 135/180
in der Harzlösung und
8.0 Teile überbasisches Calciumsulfonat in Mineralöl (z. B. PCA 11507 Fa. Exxon)
3.0 Teile Calciumsulfonat-Calciumcarbonat-Komplex mit einem Zusatz von Testbenzin
9.4 Teile technisches Weißöl
6.0 Teile gefällte Kreide
1.7 Teile Magnesium Montmorillonit
3.0 Teile Testbenzin 135/180
0.9 Teile n-Propanol
in der Mahlpaste

Eine andere Zusammensetzung für ein Korrosionsschutzmittel zur Hohlraumkonservierung ist in EP 2 865 723 B1 beschrieben. Es kann ohne Erwärmung appliziert und verfestigt werden und enthält keine flüchtigen organischen Verbindungen. Diese Zusammensetzung besteht aus 25 bis 40 Gew.-% Basisfluid, das aus VOC-freien Lösungsmitteln, Mineralölen, Estern und Kombinationen davon, sowie 19 bis 25 Gew.-% Polyesterharz, 7,0 bis 11,0 Gew.-% Wachsmischung aus zumindest zwei sich hinsichtlich ihres Erstarrungspunkts unterscheidender fester Paraffine, 12,0 bis 18 Gew.-% Korrosionsschutzadditiv, ausgewählt aus Alkali- und Erdalkalisulfonaten, Salicylaten, Wollfetten und Kombinationen davon, 15 bis 25 Gew.-% Füller und 0,4 bis 0,6 Gew.-% Additiv oder Additivmischung, umfassend Hautverhinderungsmittel, Sikkativ und Farbstoff. Dieses Korrosionsschutzmittel weist eine optimierte Rheologie auf, sodass es nach Scherung, beispielsweise durch Rühren, eine niedrige, definierte Viskosität hat, sodass es auch bei Raumtemperatur appliziert werden kann. Kommt das Korrosionsschutzmittel nach der Applikation als Film auf dem Bauteil zur Ruhe, nimmt die Viskosität wieder deutlich zu, wobei die so erzielte Ablaufhemmung durch die Wachsmischung und Sulfonate bestimmt wird.

Zur Stabilisierung des Korrosionsschutzfilms ist in beiden Fällen keine Erwärmung notwendig, auf bereits warmen Bauteilen, oder Bauteilen, die nach der Hohlraumkonservierung erwärmt werden sollen, ergeben sie aber keine spezifische Verbesserung gegenüber herkömmlichen Full-Solid-Wachsen mit wärmeaktiven Drop-Stopp-Additiven - im Gegenteil kann die Ablaufhemmung bei erwärmten Bauteilen sogar eher verschlechtert werden.

Ausgehend von diesem Stand der Technik ist es Aufgabe der vorliegenden Erfindung, ein verbessertes Hohlraumkonservierungsmittel bereitzustellen.

Diese Aufgabe wird durch ein Korrosionsschutzmittel mit den Merkmalen des Anspruchs 1 gelöst.

Ferner wird mit den Merkmalen des unabhängigen Anspruchs 5 die Verwendung des Korrosionsschutzmittels zur Hohlraumkonservierung von Bauteilen offenbart, die eine optimale Filmbildung unabhängig von einer Applikations- oder Bauteiltemperatur ermöglicht.

Bevorzugte Ausführungsformen sind in den Unteransprüchen ausgeführt.

Nach einer ersten Ausführungsform des Korrosionsschutzmittels zur Hohlraumkonservierung weist das Korrosionsschutzmittel eine Basiszusammensetzung auf, die zur Einstellung der rheologischen Eigenschaften des Korrosionsschutzmittels 1 bis 5 Gew.-% Schichtsilikat und/oder 1 bis 8 Gew.-% Esterwachs und/oder Paraffinwachs bezogen auf die Gesamtmasse des Korrosionsschutzmittels enthält. Dabei stellt das Schichtsilikat, dessen Einfluss auf die Viskosität des Korrosionsschutzmittels von der Temperatur nahezu unabhängig ist, aber dem Korrosionsschutzmittel thixotrope Eigenschaften verleiht, eine weitgehend temperaturunabhängige Filmstabilisierung und Ablaufhemmung für das Korrosionsschutzmittel bereit, d. h. eine verbesserte Wärmestabilität des frisch applizierten, noch nicht vernetzten Films. Das Ester- und/oder Paraffinwachs hingegen, dessen Viskosität temperaturabhängig ist und das oberhalb der Löslichkeitsgrenze bzw. unterhalb des Klarpunktes eine Fließgrenze besitzt, sorgt für eine temperaturabhängige Filmhärtung und verbessert die Filmstabilität nach abgeschlossener Wärmeeinwirkung.

Je nach vorgesehener Applikationstemperatur des Korrosionsschutzmittels und den dabei oder danach auftretenden Bauteiltemperaturen kann somit durch Variation der Anteile von Schichtsilikat und Ester-/ Paraffinwachs ein optimiertes Ablauf- und Gelierungsverhalten eingestellt werden, wobei wahlweise Schichtsilikat oder Ester-/ Paraffinwachs oder beide Komponenten innerhalb der angegebenen Anteilsbereiche in einem Korrosionsschutzmittel mit der folgenden Basiszusammensetzung zum Einsatz kommen können. Die Basiszusammensetzung weist nach einer ersten erfindungsgemäßen Ausführungsform der Zusammensetzung 40 bis 50 Gew.-% Basisfluid, 3 bis 10 Gew.-% Alkydharz, 10 bis 20 Gew.-% Sulfonat- und/oder Salicylatkomponente, 15 bis 25 Gew.-% Füller und 0,003 bis 0,007 Gew.-% Sikkativ-Katalysator zur Regulierung des Trocknungs- bzw. Aushärtungsverhaltens auf. Alle Anteilsangaben beziehen sich auf die Gesamtmasse des Korrosionsschutzmittels. Handelsübliche Lieferformen von Sikkativ-Katalysatoren liegen häufig in Lösungsmitteln gelöst vor, wobei unterschiedliche Konzentrationen des Sikkativ-Katalysators in Lösung angeboten werden. Um im Korrosionsschutzmittel den gewünschten Anteil des Sikkativ-Katalysators von 0,003 bis 0,007 Gew.-% (d. h. 30 bis 70 ppm) zu erreichen, liegt der Anteil einer Sikkativ-Katalysator-Lösung mit beispielsweise 1 % Wirkstoffgehalt in einem Bereich von 0,3 bis 0,7 Gew.-% in Bezug auf das Korrosionsschutzmittel. Weist die Sikkativ-Katalysator-Lösung beispielsweise 10 % Wirkstoffgehalt auf, so liegt der Anteil der Lösung in einem Bereich von 0,03 bis 0,07 Gew.-% in Bezug auf das Korrosionsschutzmittel.

Vorteilhaft löst dieses Korrosionsschutzmittel zur Hohlraumkonservierung die Aufgabe, eine Stabilisierung des als Film applizierten Hohlraumkonservierungsmittels auch ohne oder mit nur geringem Anteil einer vernetzenden Komponente sowohl mit als auch ohne Erwärmung zuzulassen, so dass die Verfestigungseigenschaften auf eine beliebige Bauteiltemperatur abgestimmt werden können. Ferner weist es hinsichtlich der Geruchsemissionen und des Korrosionsschutzes verbesserte Eigenschaften auf.

Das erfindungsgemäße Korrosionsschutzmittel verzichtet dazu nämlich auf eine vernetzende Komponente in hoher Dosierung, wie sie im Stand der Technik benötigt wird, um das Korrosionsschutzmittel auch ohne Erwärmung gelieren zu lassen. Ferner enthält das erfindungsgemäße Korrosionsschutzmittel keine aminischen Korrosionschutz- oder Bindemittelkomponenten. Durch den Verzicht auf Amine, Isocyanate und Diisocyanate werden Geruch und Emissionen deutlich verbessert bzw. verringert.

Das erfindungsgemäße Korrosionsschutzmittel kann durch Variieren der Anteile an Schichtsilikat und Ester-/Paraffinwachs sowohl für eine Filmbildung bei Kaltanwendung optimiert werden, wobei eine auf die Filmstabilität gezielte Erwärmung der Bauteile nicht erforderlich ist, als auch mit einem temperaturabhängigen Drop-Stopp-Effekt ausgestattet werden, der auch die Applikation auf erwärmten Bauteilen zulässt bzw. die Filmstabilität bei nachfolgender Wärmeeinwirkung nicht nachteilig beeinflusst. Das erfindungsgemäße Korrosionsschutzmittel kann diese beiden Anforderungen erfüllen, unabhängig davon ob das Bauteil kalt ist, kurzzeitig erwärmt wird oder dauerhaft warm ist.
Unterstützt wird die Optimierung des rheologischen Verhaltens durch die Komponenten der Basiszusammensetzung: Die Komponenten Füller und Sulfonat beeinflussen die Viskosität unabhängig von der Temperatur, wobei das Sulfonat zur Thixotropie des Korrosionsschutzmittels beiträgt, sodass die Viskosität des Korrosionsmittels unter Scherbeanspruchung deutlich abnimmt, und das Korrosionsschutzmittel, das in Ruhe zähflüssig ist, nach erfolgter Scherung, z. B. durch Rühren, eine zum Versprühen geeignete Viskosität aufweist. Daher nimmt die Viskosität des Korrosionsschutzmittels nach erfolgter Applikation als Film auf der Bauteiloberfläche und Penetration in Spalten innerhalb von Sekunden bis Minuten wieder derart zu, dass ein Auslaufen oder Abtropfen unabhängig von der Temperatur verhindert wird, bevor die Harzaushärtung stattfindet.

Das Basisfluid und das nicht reagierte Alkydharz hingegen haben als Newton'sche Flüssigkeiten eine temperaturabhängige Viskosität und stellen die Untergrenze der Viskosität des Korrosionsschutzmittels dar, um die geforderte Penetration des Mediums in Spalten und Risse sowie den Verlauf innerhalb des Hohlkörpers nach der Sprühapplikation zu bewirken. Zeitversetzt zur Applikation sorgt das vernetzte, polymerisierte Alkydharz für eine Fließgrenze, wobei der Effekt der Wärmestabilität bereits bei Harzkonzentrationen von > 3 Gew.-% eintritt. Je nach spezifischer Anforderung des Anwenders können die rheologischen Eigenschaften des Korrosionsschutzmittels gezielt eingestellt werden.

Die Reduktion des Alkydharzanteils sorgt für geringere Emissionen und verbesserten Geruch des Korrosionsschutzmittels und gleichzeitig für eine verbesserte Korrosionsschutzwirkung, die überdies noch durch das Esterwachs weiter verbessert wird.

Der gegenüber dem Stand der Technik deutlich reduzierte Alkydharzanteil trägt vorteilhaft zu einem weiter verbesserten Korrosionsschutz bei und sorgt für weniger Emissions- und Geruchsbelastung. Dem Nachteil durch Verringerung der Harzkonzentration in Bezug auf die Filmkonsistenz, da nur noch bedingt oder gar keine wachsartige, grifffeste Strukturen erzielt werden können, wird einerseits durch Einsatz besonders emissionsarmer Alkydharze, die bei gleicher Emission in höheren Konzentrationen eingesetzt werden können, oder bei gleicher Konzentration eine geringere Emission bewirken, entgegengewirkt. Andererseits fangen die anderen, die rheologischen Eigenschaften beeinflussenden Additive (Sulfonat, Füller, Schichtsilikat und Ester-/ Paraffinwachs) die Reduzierung der stabilisierenden Komponente Harz auf.

Durch den verringerten Anteil des Alkydharzes kann vorteilhaft auf ein Antihautmittel in dem erfindungsgemäßen Korrosionsschutzmittel verzichtet werden, da das Korrosionsschutzmittel mit 3 bis 10 Gew.-% Alkydharz keine Hautbildung zeigt. Vorteilhaft wird durch den Wegfall eines Antihautmittels, das häufig Oxime beinhaltet, die Geruchsbelastung durch das erfindungsgemäße Korrosionsschutzmittel weiter reduziert.

Ferner kann die Basiszusammensetzung in einer weiteren Ausführungsform des Korrosionsschutzmittels zur weiteren Reduzierung des Geruchs und der Emissionen 0,5 bis 5 Gew.-%, bevorzugt 1 bis 3 Gew.-% alkalische Säurefängerkomponente bezogen auf die Gesamtmasse des Korrosionsschutzmittels aufweisen. Die alkalische Säurefängerkomponente sorgt neben den geringeren Emissionen und dem verbesserten Geruch des Korrosionsschutzmittels durch Bindung organischer Säuren gleichzeitig für eine deutlich verbesserte Korrosionsschutzwirkung. Die alkalische Säurefängerkomponente kann aus einer Gruppe ausgewählt werden, die Alkali- und Erdalkalisalze, bevorzugt deren Phosphate, Carbonate, Silikate, Hydroxide, Oxide, und Sulfonate, darunter bevorzugt überbasische Sulfonate, sowie Zirkonphosphat und Zinkoxid aufweist, wobei Zinkoxid besonders bevorzugt ist, das neben der geruchs- und emissionsmindernden Bindung organischer Säuren, z. B. kurzkettiger Carbonsäuren, vorteilhaft auch zu einem verbesserten Korrosionsschutz beiträgt. Auch andere der angegebenen Säurefängerkomponenten können korrosionsschützende Eigenschaften aufweisen, darunter beispielsweise auch Carbonate und Sulfonate, die in bestimmten Ausführungsformen des Korrosionsschutzmittels auch als Füller bzw. Sulfonatkomponente verwendet werden. Daher kann in den Ausführungsformen, in denen z. B. überbasisches Sulfonat als Säurefängerkomponente gewählt wird, der Anteil der Säurefängerkomponente mit dem/der im Korrosionsschutzmittel enthaltenen Füller/Sulfonatkomponente addiert werden, muss aber nicht - die Säurefängereigenschaften des Füllers und der Sulfonatkomponente der Basiszusammensetzung können bereits in den oben angegebenen Bereichen ausreichend sein. Falls dies nicht der Fall ist, können die Anteile von Füller / Sulfonatkomponente mit den Anteilen für die Säurefängerkomponente addiert werden, sodass die Basiszusammensetzung dann 10,5 bis 40 Gew.-% Füller mit alkalischer Säurefängereigenschaft bzw. 5,5 bis 35 Gew.-% Sulfonatkomponente mit alkalischer Säurefängereigenschaft aufweisen kann.

Ferner kann die Basiszusammensetzung in einer weiteren Ausführungsform des Korrosionsschutzmittels zur weiteren Reduzierung des Geruchs und der Emissionen 0,1 bis 5 Gew.-%, bevorzugt 0,5 bis 2,5 Gew.-%, Geruchsfängerkomponente bezogen auf die Gesamtmasse des Korrosionsschutzmittels aufweisen. Dabei kann es sich beispielsweise um Adsorptionsmittel für Aldehyde wie Zeolithe oder um reaktive Komponenten zur Umsetzung von Aldehyden wie Amide, beispielsweise Malonamid, handeln.

Alternativ oder zusätzlich kann die Basiszusammensetzung ein Farbstoffadditiv aufweisen, das in dem Korrosionsschutzmittel in einem Anteil von 0,001 bis 0,05 Gew.-%, bevorzugt 0,01 Gew.-% vorliegt. Das Farbstoffadditiv erleichtert eine optische Überprüfung bei der Applikation des Korrosionsschutzmittels und des applizierten Films, wobei ein fluoreszierendes Farbstoffadditiv bevorzugt sein kann, sodass die optische Überprüfung die Nutzung einer entsprechenden (UV-)Lichtquelle zur Anregung des fluoreszierenden Farbstoffadditivs umfasst.

In einer bevorzugten Ausführungsform kann das Korrosionsschutzmittel in Abhängigkeit des Anteils des Schichtsilikats zumindest eine polare Quellmittelkomponente mit zumindest einer Carbonyl- und/oder Hydroxylgruppe aufweisen. Unter Quellmittelkomponente wird hierbei ein Mittel verstanden, welches das Quellen des Schichtsilikats unterstützt. Die die polare Quellmittelkomponente ist aus einer Gruppe ausgewählt, die Wasser, kurzkettige Alkohole, wie beispielsweise Methanol und Ethanol, Ester wie Propylencarbonat und Ketone, beispielsweise Aceton, sowie Mischungen davon aufweist. Ein Anteil der zumindest einen polaren Quellmittelkomponente kann dabei in einem Bereich von 10 bis 30 Gew.-%, bevorzugt in einem Bereich von 17-23 Gew.-%, bezogen auf den Anteil des Schichtsilikats liegen. Besonders bevorzugt sind Mischungen von Quellmittelkomponenten, die 19 % organische Quellmittelverbindung, d. h. kurzkettiger Alkohol, Ester oder Keton, und 1 bis 5 % Wasser bezogen auf den Anteil des Schichtsilikats aufweisen.

In dieser besonders bevorzugten Ausführungsform kann das erfindungsgemäße Korrosionsschutzmittel, das 0,1 bis 7 Gew.-% Schichtsilikat aufweist, in Abhängigkeit des Anteils des Schichtsilikats 0,019 bis 1,33 Gew.-% Quellmittelkomponente, bezogen auf die Gesamtmasse des Korrosionsschutzmittels, als Quellmittel für das Schichtsilikat, sowie 0,005 bis 0,07 Gew.-% Wasser, bezogen auf die Gesamtmasse des Korrosionsschutzmittels, zum Aufschluss des Schichtsilikats aufweisen, wobei Leitungswasser ausreichend ist. Als Quellmittelkomponente kann vorzugsweise Propylencarbonat eingesetzt werden, das ein fast geruchsloses Lösungsmittel ist. Alternative Quellmittelkomponenten zur Interkalation im Schichtsilikat können hierbei aber auch Aceton, Methanol oder Ethanol oder andere kurzkettige Alkohole sein.

In einer weiteren Ausführungsform kann das erfindungsgemäße Korrosionsschutzmittel, das 1 bis 5 Gew.-% Schichtsilikat enthält, in Abhängigkeit des Anteils des Schichtsilikats 0,19 bis 0,95 Gew.-%, Quellmittelkomponente bezogen auf die Gesamtmasse des Korrosionsschutzmittels sowie 0,01 bis 0,05 Gew.-%, Wasser, bezogen auf die Gesamtmasse des Korrosionsschutzmittels, zum Aufschluss des Schichtsilikats aufweisen.

So können der Anteil der Quellmittelkomponente insbesondere bei 19 % des Schichtsilikatanteils und der Anteil des Wassers bei 1 bis 5 % des Schichtsilikatanteils liegen. Folglich weist das Korrosionsschutzmittel keine Quellmittelkomponente und kein Wasser auf, wenn kein Schichtsilikat enthalten ist.

Als Basisfluid kann ein erfindungsgemäßes Korrosionsschutzmittel ein unpolares Lösungsmittel aufweisen, das bevorzugt ein Gruppe-III-Grundöl, d. h. ein katalytisch hydroisomerisiertes und entwachstes neutrales Grundöl mit hydrierten, hoch-isoparaffinischen Kohlenwasserstoffen (C20-50), sein kann, das eine kinematische Viskosität (40 °C) im Bereich von 5 bis 40 mm²/s, vorzugsweise von 10 bis 30 mm²/s, insbesondere 10 bis 20 mm²/s aufweist. Alternativ kann auch ein Gruppe-II- oder Gruppe-IV-Grundöl mit entsprechender kinematischer Viskosität (40 °C) als Basisfluid eingesetzt werden. Bevorzugt sind dabei Grundöle mit einem Viskositätsindex von über 100, die nur geringe Veränderungen der Viskosität in Abhängigkeit der Temperatur zeigen. Es können auch Mischungen unterschiedlicher Grundöle eingesetzt werden.

Alternativ können als Basisfluid aber auch polare Lösungsmittel eingesetzt werden, wie beispielsweise Wasser, Methanol, Ethanol, ein anderer kurzkettiger Alkohol, Aceton oder eine Mischung der vorgenannten wie beispielsweise eine Methanol/Wasser-Mischung oder Ethanol/Wasser-Mischung. Für den Fall, dass sowohl für das Basisfluid als auch für die Quellmittelkomponente Wasser, Methanol, Ethanol, andere kurzkettige Alkohole, Aceton oder eine Mischung der vorgenannten wie beispielsweise eine Methanol/Wasser-Mischung oder Ethanol/Wasser-Mischung gewählt werden, kann der Anteil des gewählten polaren Lösungsmittels im Bereich der Summe der jeweils angegeben Anteile für das Basisfluid und die Quellmittelkomponente liegen, d. h., wenn als Basisfluid und Quellmittelkomponente dasselbe polare Lösungsmittel gewählt wird, entspricht der Anteil des polaren Lösungsmittels der Summe aus Basisfluid und Quellmittelkomponente.
Das in einem erfindungsgemäßen Korrosionsschutzmittel eingesetzte Alkydharz ist vorzugsweise ein geruchs- und emissionsarmes, niedrigviskoses, nicht wassermischbares und lufttrocknendes Alkydharz. Bevorzugt können langölige Alkydharze eingesetzt werden, die einen nichtflüchtigen Anteil von zumindest 98 % und eine dynamische Viskosität (20 °C) von 500 bis 12.000 mPas, bevorzugt von 1.000 bis 6.000 mPas, aufweisen.

Als Sulfonat- oder Salicylatkomponente kann vorzugsweise ein thixotropes überbasisches Calciumsulfonat eingesetzt werden, das sowohl zum Korrosionsschutz als auch zur Strukturviskosität beiträgt. Alternativ oder zusätzlich kann auch ein anderes korrosionsschutzverbesserndes Sulfonat wie amorphes, überbasisches Calcium- oder Magnesiumsulfonat oder ein amorphes, überbasisches Calciumsalicylat oder Mischungen der vorgenannten gewählt werden.

Der Füller kann aus Carbonaten, Siliziumdioxid, Silikaten, Sulfaten und Oxiden ausgewählt sein. Einsetzbare Carbonate umfassen beispielsweise Calciumcarbonat, insbesondere natürliches, gefälltes Calciumcarbonat, z. B. Kreide, sowie Dolomit und Bariumcarbonat. Siliziumdioxid kann in amorpher oder kristalliner Form eingesetzt werden, z. B. als Quarz, Cristobalit, Kieselgur, pyrogene, gefällte, synthetische Kieselsäuren oder Glasmehl. Silikate als Füllstoffe können aus Talkum, Pyrophyllit, Chlorit, Kaolin, Glimmer, Feldspat, Wollastonit, Schiefermehl, Hornblende, Perlit, Aluminiumsilikat, Calciumsilikat, Calcium-Aluminium-Silikat oder Natrium-Aluminium-Silikat ausgewählt werden. Geeignete Sulfate sind beispielsweise Bariumsulfat oder Calciumsulfat. Oxide als Füllstoffe können aus Titandioxid, Aluminiumoxid, z. B. Korund, Al-Hydroxid, Mg-Hydroxid und Mg-Oxid ausgewählt sein. In einer besonders bevorzugten Ausführungsform kann als Füller Calciumcarbonat aufgrund der geringeren Löslichkeit und der geringeren Korrosivität im Vergleich zu bspw. Calciumsulfat gewählt werden. Ferner ist Calciumcarbonat kaum als Säurefänger wirksam, sodass es keine Überlappung mit der alkalischen Säurefängerkomponente gibt.

Der Sikkativ-Katalysator kann ein schwermetallbasierter Komplex sein, der auf Kobalt, Mangan, Blei oder Zink basiert; bevorzugt wird aber ein eisenbasierter Komplex als Sickativ-Katalysator in einem erfindungsgemäßen Korrosionsschutzmittel eingesetzt, der auch bei geringer Einsatzmenge eine gute Trocknungsaktivität zeigt und nicht zu Verfärbung führt. Geeignete schwermetallbasierte Sikkativ-Katalysator-Komplexe, z. B. der eisenbasierte Komplex, liegen in der üblichen Lieferform in einem Lösungsmittel wie z. B. Propylenglykol vor. Dies trifft auch für die besonders bevorzugt eingesetzte eisenbasierte Katalysator-Komplex-Lösung zu, die unter dem Namen Borchi® Oxy-Coat von Borchers GmbH, Langenfeld, DE, erhältlich ist. Dort wird der in Lösung vorliegende wirksame Eisenkomplex (CAS-Nr. 478945-46-9) in unterschiedlichen Konzentrationen angeboten, sodass die Dosierung von der Konzentration des Eisenkomplexes in der jeweiligen Lieferform abhängt. Liegt eine gewünschte - und besonders bevorzugte - Konzentration des wirksamen Komplexes in dem erfindungsgemäßen Korrosionsschutzmittel beispielsweise bei 0,005 % (d. h. 50 ppm) kann dieser Gehalt wahlweise durch 0,5 % einer 1 %igen Katalysator-Komplex-Lösung oder durch 0,05 % einer 10 %igen Katalysator-Komplex-Lösung erreicht werden. Die Verwendung von höher konzentrierten Katalysator-Komplex-Lösungen ist dabei bevorzugt, da hierdurch eine Viskositätserniedrigung der Zusammensetzung durch das in der Lieferform umfasste Lösungsmittel begrenzt werden kann.

Das zur Einstellung der Rheologie verwendete Schichtsilikat kann insbesondere ein Dreischichtsilikat oder ein Gemisch sein, das ein Dreischichtsilikat aufweist. Ein bevorzugtes Dreischichtsilikat kann Montmorillonit oder Hectorit sein, und ein bevorzugtes Gemisch kann ein Bentonit sein, der 60 bis 80 % Montmorillonit enthält. Weitere Begleitmineralien im Bentonit können Quarz, Glimmer, Feldspat, Pyrit oder auch Calcit sein. Ferner können Smektite als Dreischichtsilikat aufweisendes Gemisch eingesetzt werden. Smektite bestehen ebenfalls hauptsächlich aus Montmorillonit, enthalten aber auch Quarz- und Calcitstaub.

Montmorillonit und Hectorit sind Tonminerale aus der Mineralklasse der Silikate und Germanate. Montmorillonit ist ein Natrium-Aluminium-Silikat mit der chemischen Zusammensetzung (Na, Ca)_{0,3}(Al, Mg)₂Si₄O₁₀(OH)₂·nH₂O. Hectorit ist ein Lithium-Magnesium -Silikat mit der chemischen Zusammensetzung Na_{0.3}(Mg, Li)₃Si₄O₁₀(OH)₂.

Das alternativ oder zusätzlich zu dem Schichtsilikat eingesetzte Ester- und/oder Paraffinwachs kann einen Tropfpunkt im Bereich von 65 bis 90 °C, bevorzugt 70 bis 80 °C aufweisen. Ein beispielhaftes Esterwachs kann ein Sonnenblumenwachs sein.

Eine erfindungsgemäße Verwendung des erfindungsgemäßen Korrosionsschutzmittels zur Hohlraumkonservierung eines Bauteils sieht vor, dass die rheologischen Eigenschaften des Korrosionsschutzmittels in Abhängigkeit einer vorbestimmten Applikationstemperatur und einer vorbestimmten Bauteiltemperatur durch die vorbestimmbaren bzw. vorbestimmten Anteile des Schichtsilikats und des Ester- und/oder Paraffinwachses eingestellt werden. Ein erfindungsgemäßes Korrosionsschutzmittel, das Schichtsilikat, aber kein Wachs enthält, zeigt ein Ablaufverhalten, das nicht oder nur kaum von der Applikations- und der Substrat- bzw. Bauteiltemperatur abhängig ist, und vom Anteil des Schichtsilikats bestimmt wird, wobei ein höherer Anteil an Schichtsilikat zu stärkerer Ablaufhemmung führt. Bei einem erfindungsgemäßen Korrosionsschutzmittel, das Wachs, aber kein Schichtsilikat enthält, hängt das Ablaufverhalten sowohl von der Applikations- als auch von der Bauteiltemperatur ab: Bei Kaltapplikation, d. h. ohne Erwärmen des Korrosionsschutzmittels, auf einem Bauteil mit gleicher oder ähnlicher Temperatur zeigt ein wachshaltiges Korrosionsschutzmittel ein Ablaufverhalten, bei dem nach wenigen Minuten Ablaufhemmung eintritt, wohingegen die Kaltapplikation des wachshaltiges Korrosionsschutzmittel auf einem erwärmten Bauteil zu einem Ablaufverhalten mit einer deutlich verzögerten Ablaufhemmung führt. Hingegen stellt sich bei Warmapplikation des wachshaltigen Korrosionsschutzmittels auf einem kalten, d. h. nicht erwärmten Bauteil, ein Drop-Stopp-Effekt ein, d. h. Ablaufhemmung tritt kurz nach Applikation ein. Erfindungsgemäße Korrosionsschutzmittel, die sowohl Schichtsilikat als auch Wachs enthalten, zeigen zwar wie die wachshaltigen Korrosionsschutzmittel ein Ablaufverhalten, das von der Applikations- und der Bauteiltemperatur abhängig ist, aber mit verbesserter Ablaufhemmung, wobei ein höherer Anteil an Schichtsilikat zu stärkerer Ablaufhemmung führt.

Mit den weiteren rheologisch wirksamen Komponenten des erfindungsgemäßen Korrosionsschutzmittels, Basisfluid, Füller, Alkydharz kann durch eine entsprechende Wahl der Verhältnisse dieser Komponenten das gewünschte anwendungstechnische rheologische Verhalten eingestellt werden: Nachfließen nach Aufsprühen/Penetration in Spalten, Versprühbarkeit, Wärmestabilität des Films, mechanische Stabilität des Film, etc. Vorteilhaft kann hierbei die Basiszusammensetzung vorgefertigt bereitgestellt werden und durch Zugabe der Anteile von Wachs und/oder Schichtsilikat das gewünschte rheologische Verhalten des Korrosionsschutzmittels eingestellt werden.

Weitere Ausführungsformen sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Die Figuren sind lediglich eine schematische Darstellung einer Ausführungsform der Erfindung.

Dabei zeigen:
- **Fig. 1**: ein Diagramm, das die Viskosität eines erfindungsgemäßen Korrosionsschutzmittels B8 im Vergleich zu einem herkömmlichen Korrosionsschutzmittel V1 zeitabhängig während der Lagerung und Applikation zeigt,
- **Fig. 2**: eine fotografische Abbildung eines Ablauftests unterschiedlicher erfindungsgemäßer Korrosionsschutzmittel B2, B8, B9, B3 und B4 im Vergleich zu dem herkömmlichen Korrosionsschutzmittel V1 bei einer Applikationstemperatur von 20 °C und einer Substrattemperatur von 20 °C,
- **Fig. 3**: eine fotografische Abbildung eines Ablauftests der erfindungsgemäßen Korrosionsschutzmittel B2, B8, B9, B3 und B4 im Vergleich zu dem herkömmlichen Korrosionsschutzmittel V1 bei einer Applikationstemperatur von 20 °C und einer Substrattemperatur von 60 °C,
- **Fig. 4**: eine fotografische Abbildung eines Ablauftests der erfindungsgemäßen Korrosionsschutzmittel B2, B8, B9, B3 und B4 im Vergleich zu dem herkömmlichen Korrosionsschutzmittel V1 bei einer Applikationstemperatur von 60 °C und einer Substrattemperatur von 20 °C,
- **Fig. 5**: eine Abfolge aus vier fotografischen Abbildungen eines Salzsprühtests mit dem herkömmlichen Korrosionsschutzmittel V1 und eine Abfolge aus acht Abbildungen eines Salzsprühtests mit einem erfindungsgemäßen Korrosionsschutzmittel B5,
- **Fig. 6**: ein Diagramm zu Aldehydemissionen erfindungsgemäßer Korrosionsschutzmittel B5, B6 und B9 im Vergleich zum herkömmlichen Korrosionsschutzmittel V1,
- **Fig. 7**: ein Diagramm zu Säureemissionen der erfindungsgemäßen Korrosionsschutzmittel B5, B6 und B9 im Vergleich zum herkömmlichen Korrosionsschutzmittel V1,
- **Fig. 8**: ein Diagramm zu TVOC-Emissionen der erfindungsgemäßen Korrosionsschutzmittel B5, B6 und B9 im Vergleich zum herkömmlichen Korrosionsschutzmittel V1.

Das erfindungsgemäße Korrosionsschutzmittel weist gegenüber den herkömmlichen kalt applizierbaren Korrosionsschutzmitteln, die ohne Wärmeeinwirkung aushärten können, einen verbesserten Korrosionsschutz und deutlich verringerte Emissionen und Geruchsbelastungen auf. Darüber hinaus gestattet das erfindungsgemäße Korrosionsschutzmittel auch eine andauernde oder vorübergehende Wärmeeinwirkung auf das Bauteil, in dessen Hohlraum das Korrosionsschutzmittel zur Ausbildung eines Films appliziert werden soll, ohne dass die Filmstabilität oder Aushärtung nachteilig beeinflusst wird. Die in dem erfindungsgemäßen Korrosionsschutzmittel eingestellten rheologischen Eigenschaften stellen eine Viskosität und Fließverhalten bereit, die für die Versprühbarkeit und die Fähigkeit zum Gelieren nach vorübergehender Erwärmung (Drop Stopp) sorgen. Tabelle 1 zeigt die Zusammensetzungen des erfindungsgemäßen Korrosionsschutzmittels mit breiten und bevorzugten Anteilsbereichen der jeweiligen Komponenten auf. Die ersten fünf Komponenten Basisfluid, Alkydharz, Sulfonatkomponente, Füller und Katalysator bilden die Basiszusammensetzung, der in Abhängigkeit der bei der Verwendung des Korrosionsschutzmittels vorgesehenen Bauteil- und/oder Applikationstemperaturen wahlweise Schichtsilikate und/oder Ester-/ Paraffinwachs in den angegebenen Anteilen zugefügt werden, um ein erfindungsgemäßes Korrosionsschutzmittel zu erhalten. Die Anteilsangaben beziehen sich jeweils auf 100 Gew.-% des Korrosionsschutzmittels.

**Tabelle 1: Komponenten des erfindungsgemäßen Korrosionsschutzmittels**

| | | Anteil [Gew-%] |
|---|---|---|
| Basisfluid | | 40-50 |
| Alkydharz | | 3-10 |
| Sulfonat- und/oder Salicylatkomponente | | 10-20 |
| Füller | | 15-25 |
| Katalysator/Sikkativ | | 0,003-0,007 |
| *und zur Einstellung der gewünschten Filmstabilität* | | |
| Schichtsilikate | | 1-5 |
| polare Quellmittelkomponente | | (17-23 % bezogen auf Schichtsilikat) |
| vorzugsweise: | | |
| - organische Quellmittelkomponente und | | 0,19-0,95 |
| - Wasser | | 0,01-0,05 |
| *und*/*oder* | | |
| Esterwachs und/oder Paraffinwachs | | 1-8 |
| *und optional* | | |
| alkalische Säurefängerkomponente | | 1-3 |
| Geruchsfängerkomponente | | 0,5-2,5 |
| Farbstoffadditiv | | 0,01 |
| Antihautmittel | | - |

Der Anteil des Alkydharzes in dem erfindungsgemäßen Korrosionsschutzmittel ist deutlich reduziert, um Emissionen und Geruch zu verringern und den Korrosionsschutz zu verbessern, da höhere Harzanteile einem exzellenten Korrosionsschutz im Allgemeinen abträglich sind. Ein derart geringer Anteil an Alkydharz würde aber, insbesondere da keine vernetzende Komponente eingesetzt wird, zu einer verlangsamten Filmbildung und weicheren Filmkonsistenz mit kaum oder gar keinen wachsartigen, grifffesten Strukturen führen, wenn dies nicht durch die weiteren Komponenten des erfindungsgemäßen Korrosionsschutzmittels, die Einfluss auf das rheologische Verhalten haben, ausgeglichen würde. Dabei sorgen Schichtsilikat, Füller und Sulfonatkomponente, deren Einfluss auf die Viskosität des Korrosionsschutzmittels kaum von der Temperatur abhängig ist, für eine verbesserte Filmstabilität, und verhindern das Ablaufen, während Esterwachs, dessen Viskosität temperaturabhängig ist, für ein Drop-Stopp-Verhalten sorgt und die Filmhärte verbessert. Nicht reagiertes Alkydharz und Basisfluid haben eine temperaturabhängige Viskosität und sorgen für die Sprühbarkeit des Korrosionsschutzmittels und dessen Penetration in Spalten, wobei das Alkydharz zeitversetzt durch Vernetzung bzw. Polymerisation für eine Fließgrenze sorgt, sodass der applizierte Film thermisch stabil wird und eine ausreichende Filmhärte aufweist.

Zur Verminderung der Geruchsbelastung und der Emissionen werden in dem erfindungsgemäßen Korrosionsschutzmittel Alkydharze eingesetzt, die geruchs- und emissionsarm, und darüber hinaus niedrigviskos, nicht wassermischbar und lufttrocknend sind. Vorzugsweise sind die verwendeten Alkydharze langölig und weisen einen nichtflüchtigen Anteil von zumindest 98 % auf. Die dynamischen Viskositäten (20 °C) liegen in einem Bereich von 500 bis 12.000 mPas, bevorzugt von 1.000 bis 6.000 mPas.

Geeignete Alkydharze sind beispielsweise WorléeKyd® SD 8300 (V_{dyn} (20 °C, 100 s⁻¹, C35/1°) 3.000 bis 6.000 mPas), WorléeKyd® VP-W 2733/00 (V_{dyn} (20 °C, 100 s⁻¹, C35/1°) 3.000 bis 5.000 mPas) oder WorléeKyd® RS 2174 (V_{dyn} (20 °C, 100 s⁻¹, C35/1°) < 750 mPas) sein, erhältlich von Worlée-Chemie GmbH, Klingenberg am Main, DE. Weitere geeignete Alkydharze sind beispielsweise Bremar® RK 5949 (V_{dyn} (20 °C, 100 s⁻¹, C35/1°) 1.500-3.000 mPas), Bremar® RK 6389 (V_{dyn} (20 °C, 100 s⁻¹, C35/1°) 1.000-2.000 mPas), Bremar® RK 6520 (V_{dyn} (20 °C, 100 s⁻¹, C35/1°) 3.000 bis 6.000 mPas), Rokralux® RK 6739 (V_{dyn} (20 °C, 100 s⁻¹, C35/1°) 1.000-2.000 mPas), Bremar® RK 7046 (V_{dyn} (20 °C, 100 s⁻¹, C35/1°) 1.500-3.000 mPas), Bremar® RK 7047 (V_{dyn} (20 °C, 100 s⁻¹, C35/1°) 2.000 mPas), erhältlich von Robert Kraemer GmbH & Co. KG, Rastede, DE, oder Synthalat® QL 4724 (V_{dyn} (23 °C) 8.000-12.000 mPas), erhältlich von Synthopol Chemie, Buxtehude, DE.

Das Basisfluid wird ebenfalls bezüglich Geruch/Emissionen sowie Viskosität ausgewählt. Daher wird das Basisfluid vorzugsweise aus VOC- und aromatenfreien Lösungsmitteln ausgewählt, die eine kinematische Viskosität (40 °C) von 5 bis 40 mm²/s, vorzugsweise von 10 bis 30 mm²/s, beispielsweise 10 bis 20 mm²/s, und einen Viskositätsindex (VI) von zumindest 100 und damit nur eine geringe Temperaturabhängigkeit der Viskosität aufweisen. Bevorzugt können hierzu Gruppe III Öle, gegebenenfalls auch Gruppe IV Öle als Basisfluid eingesetzt werden. Geeignete Gruppe III Grundöle sind beispielsweise Nexbase® 3043 (kinematische Viskosität (40 °C) = 20 mm²/s, VI ≥ 121) oder Nexbase® 3030 (kinematische Viskosität (40 °C) = 12 mm²/s, VI ≥ 100) von Neste N. V., Beringen, BE. Selbstverständlich können auch Mischungen unterschiedlicher Grundöle als Basisfluid eingesetzt werden. Alternativ können ferner als Basisfluid polare Lösungsmittel eingesetzt werden, wie beispielsweise Wasser, Methanol, Ethanol, ein anderer kurzkettiger Alkohol oder Aceton oder eine Mischung der vorgenannten wie eine Methanol/Wasser-Mischung oder Ethanol/Wasser-Mischung.

Die thixotrope Sulfonatkomponente in den nachfolgenden beispielhaften Zusammensetzungen ist ein überbasisches Calciumsulfonat, das beispielsweise unter den Namen Arcot® 645 von PCAS, Longjumeau, FR, Sulfogel® 180/200A/280, 380 von Holland Chemicals, Burr Ridge, USA, oder ThixoCal® 2000 von Soltex, Houston USA, erhältlich ist.

Alternativ zu einem thixotropen überbasischen Calciumsulfonat sind als Korrosionsschutzkomponente auch amorphe überbasische Calciumsulfonate, z. B. Calcinate® bzw. Hybase® OTS, OR, C300, C400, C400C, 313 von Lanxess, Köln, DE, amorphe überbasische Magnesiumsulfonate, z. B. Hybase® M 400 von Lanxess oder amorphe überbasische Calciumsalicylate, wie z. B. Hybase® S-170D, S-200, S-270D, MS100 von Lanxess einsetzbar. Allerdings tragen diese nicht zur Strukturviskosität bei, da sie keine thixotropen Eigenschaften aufweisen.

Als Füller bzw. Pigment wird in den nachfolgenden beispielhaften Zusammensetzungen des erfindungsgemäßen Korrosionsschutzmittels Calciumcarbonat (z. B. Omyacarb® 2-AL von Omya GmbH, DE) eingesetzt, das gegenüber dem herkömmlich eingesetzten Calciumsulfat verbesserte Korrosionsschutzeigenschaften hat, unter anderem wegen der geringeren Löslichkeit des Carbonats und wegen der höheren Korrosivität des Sulfats. Als Füllstoff bzw. Pigment sind jedoch auch eine Vielzahl anderer bekannte Stoffe einsetzbar, umfassend weitere Erdalkali-Carbonate, verschiedene Siliziumdioxidformen und Silikate, Sulfate und Oxide.

Als Farbstoffadditiv kann vorzugsweise ein fluoreszierender optischer Aufheller wie z. B. Tinopal® OB von Ciba, Basel, CH, eingesetzt werden.

Zur Steuerung der Trocknungszeit des gebildeten Films wird als Sikkativ ein metallbasierter Katalysator eingesetzt, der die Autooxidation des Alkydharzes katalysiert. Geeignete Katalysatoren können schwermetallbasierte Katalysatoren sein. Bekannte Sikkative umfassen Octoate und Naphthenate auf Cobalt-, Mangan- und Zirconiumbasis. Weitere bekannte Sikkative sind Schwermetalloxide von Blei, Mangan, Kobalt, Zink sowie Metallseifen von meist ungesättigten Fettsäuren. Vorzugsweise wird als Sikkativ aber ein Eisenkomplex eingesetzt, der in Lösungsmittel gelöst unter dem Namen Borchi® Oxy-Coat von Bochers GmbH, Langenfeld, DE, erhältlich ist.

Die bei der Aushärtung des Alkydharzes freigesetzten Aldehyde und Carbonsäuren werden in dem erfindungsgemäßen Korrosionsschutzmittel durch Säure- und Geruchsfängerkomponenten gebunden. Die alkalische Säurefängerkomponente vermindert durch das Binden der freigesetzten vorwiegend kurzkettigen Carbonsäuren nicht nur Geruch und Emissionen, sondern hat damit auch korrosionsschützende Eigenschaften, verbessert also den Korrosionsschutz. Eine bevorzugte alkalische Säurefängerkomponente ist Zinkoxid, erhältlich z. b. als Bayoxide® Z Active von Borchers GmbH, Langenfeld, DE. Weitere Säurefängerkomponenten umfassen Alkali- und Erdalkalisalze, Phosphat, Carbonat, Silikat, Strontiumphosphat, Magnesiumoxid, Calciumhydroxid, Zirconiumphosphat sowie überbasische Natriumsulfonate (z. B. Lubrizol® 5318 A von Lubrizol, Wickliffe, USA) oder überbasische Calcium-Sulfonate (z. B. Calcinate® OR von Lanxess, Köln, DE).

Als Geruchsfängerkomponente zur Adsorption der entstehenden Aldehyde können Zeolithe (Zeoflair® 100 von Zeochem® AG, Rüti, CH), die auch kurzkettige Carbonsäuren adsorbieren, oder zur reaktiven Umsetzung der Aldehyde reaktive Komponenten wie Amide, z. B. Malonamid, eingesetzt werden.

Die zur Erhöhung der Viskosität des erfindungsgemäßen Korrosionsschutzmittels zur Verbesserung der Wärmestabilität des frischen, noch nicht vernetzten Films eingesetzten Schichtsilikate umfassen insbesondere Dreischichtsilikate wie Montmorillonit oder Hectorit. Besonders bevorzugt kann eine Mischung verschiedener Tonmineralien, vorzugsweise Bentonit eingesetzt werden, das als Hauptbestandteil 60 bis 80 % Montmorillonit enthält. Die weiteren, in Bentoniten enthaltenen Mineralien umfassen Quarz, Glimmer, Feldspat, Pyrit oder auch Calcit. Alternativ zu Bentoniten können auch Smektite eingesetzt werden, deren Hauptbestandteil ebenfalls Montmorillonit ist.

Ein Beispiel für einen zum Einsatz in einem erfindungsgemäßen Korrosionschutzmittel geeigneten Bentonit ist ein aufbereiteter, organisch modifizierter Bentonit, der unter dem Namen Baragel ® 3000 von Elementis Specialties, Inc., Hightstown, USA, erhältlich ist. Zum Aufschluss des Schichtsilikats kann dem erfindungsgemäßen Korrosionsschutzmittel Wasser, das beim Herstellprozess verdampft, und ein Quellmittel, z. B. Propylencarbonat, zugegeben werden, das mit dem Schichtsilikat einen Einlagerungskomplex bildet, und damit den Aufschluss unterstützt. Die Anteile von Wasser (Leitungswasser ist ausreichend) und Quellmittel hängen demzufolge von dem Anteil des Schichtsilikats in dem Korrosionsschutzmittel ab.

Weitere Beispiele für Bentonite, die in einer erfindungsgemäßen Zusammensetzung eingesetzt werden können, sind Baragel® 10, Bentone® 34. Ebenso kann das Additiv Nykon® 77, das Tetraalkylammonium-Bentonit mit einem Korrosionsinhibitor aufweist, als Schichtsilikat in einer erfindungsgemäßen Zusammensetzung eingesetzt werden, wobei allerdings eine andere Quellmittelkomponente als Propylencarbonat bevorzugt ist, da das Additiv ferner Natriumnitrit enthält, das mit Propylencarbonat unter Bildung von Stickoxiden und Kohlendioxid reagieren würde. Ein Beispiel für Smektit als verwendbares Schichtsilikat ist Baragel® 20, bei dem es sich um ein organisch modifiziertes Smektit-Tonmineral handelt. Geeignete Schichtsilikate, die auf Hektorit basieren, sind beispielsweise Baragel® 24, Bentone® 27, Bentone® 38, sowie Laponit ® EP, RD, RDS, S482 und Laponite® SL25. Alle genannten Beispiele sind von Elementis Specialties, Inc., Hightstown, USA, erhältlich.

Das zur Verbesserung des Korrosionsschutzes und zur Stabilisierung des Films nach potentieller Wärmeeinwirkung (beim Abkühlen) einsetzbare Paraffinwachs kann beispielsweise Mikrowachs wie Sasolwax 3279 (Schmelzbereich 76 bis 82 °C) oder Paraffinwachs, Fischer-Tropsch-Wachs, wie Sasolwax C80M (mit einem Erweichungspunkt > 70 °C) oder eine Mischung verschiedener Paraffinwachse sein.

Anstelle von KW-Paraffinwachsen kann das erfindungsgemäße Korrosionsschutzmittel zur Verbesserung des Korrosionsschutzes und zur Stabilisierung des Films nach potentieller Wärmeeinwirkung (beim Abkühlen) vorzugsweise ein Esterwachs oder eine Esterwachsmischung aufweisen, das ein natürliches Wachs, vorzugsweise basierend auf nachwachsenden Rohstoffen ist. Die Hauptkomponenten natürlicher Wachse sind Ester von Fettsäuren mit langkettigen, aliphatischen, primären Alkoholen und werden vorwiegend durch Extraktion gewonnen. Ein bevorzugtes Esterwachs kann beispielsweise Sonnenblumenwachs sein, das überwiegend C₄₂-C₆₀ Ester (C₂₀-C₃₂ Fettalkohole verestert mit C₂₀-C₂₈ Fettsäuren) mit einem Tropfpunkt zwischen 74 und 80 °C enthält. Sonnenblumenwachs ist beispielsweise unter dem Namen Kahlwax 6607 L von Kahl & Co.KG, Trittau, DE, oder Sunflower Wax von KosterKeunen Holland BV, Bladel, NL, erhältlich.

Im Folgenden werden die Vorteile des erfindungsgemäßen Korrosionsschutzmittels und die Einstellbarkeit des rheologischen Verhaltens anhand von Beispielen gegenüber einem Vergleichsbeispiel eines herkömmlichen Korrosionsschutzmittels aus dem Stand der Technik verdeutlicht.

**Tabelle 2: Vergleichsbeispiel 1 (V1) einer Zusammensetzung eines Korrosionsschutzmittels gemäß EP 2 865 723 B1**

| | V1 [Gew-%] |
|---|---|
| Basisfluid VOC- und aromatenfreies Lösungsmittel (Exxsol™ D140) und paraffinisches Grundöl, solventraffiniert | 9,89 |
| | 23,6 |
| Polyesterharz (Alkydharz, Synolac® AC 4200) | 22 |
| erstes Wachs (Tudamelt 64/66, Schmelzbereich 60 bis 65 °C) | 2,5 |
| zweites Wachs (Sasolwax 3099, Schmelzbereich 35 bis 55 °C) | 5 |
| drittes Wachs (Sasolwax 3279, Schmelzbereich 76 bis 82 °C) | 1,5 |
| überbasisches Calciumsulfonat (Arcot® 645) | 15 |
| Füller (Calciumsulfat) (Trefil® 1313-600) | 20 |
| Hautverhinderungsmittel (Ascinin® Anti Skin 0444) | 0,4 |
| Sikkativ (Borchi® Oxy-Coat), enthält 1 % Katalysatorkomplex | 0,1 |
| Farbstoffadditiv (Tinopal® OB) | 0,01 |
| Summe | 100 |

**Tabelle 3: Beispiele B2, B3 und B4 für erfindungsgemäße Zusammensetzungen**

| | B2 [Gew.-%] | B3 [Gew.-%] | B4 [Gew.-%] |
|---|---|---|---|
| Basisfluid (Nexbase® 3030) | 49,44 | | |
| (Nexbase® 3043) | | 47,64 | 46,72 |
| Alkydharz (Worleekyd® SD 8300) | 6 | 6 | 6 |
| überbasisches Calciumsulfonat (Arcot® 645) | 16 | 15,7 | 15,18 |
| Füller/Pigment, CaCO3 (Omyacarb® 2-AL) | 25 | 25,4 | 24,56 |
| alkalische Verbindung, ZnO (Bayoxide® Z active) | 2 | 2 | 2 |
| Katalysator, Sikkativ (Borchi® Oxy-Coat 1410), enthält 10 % Katalysatorkomplex | 0,05 | 0,05 | 0,05 |
| Schichtsilikate (Baragel® 3000) | - | 1 | 0,4 |
| Quellmittel (Propylencarbonat, Jeffsol® PC) | | 0,19 | 0,076 |
| Leitungswasser | | 0,01 | 0,004 |
| Esterwachs (Kahlwax 6607L) | - | 2 | 5 |
| Paraffinwachs (Sasolwax 3279) | 1,5 | - | - |
| Farbstoff (Tinopal®) | 0,01 | 0,01 | 0,01 |
| Summe | 100 | 100 | 100 |

**Tabelle 4: Beispiele B5, B6 und B7 für erfindungsgemäße Zusammensetzungen**

| | B5 [Gew.-%] | B6 [Gew.-%] | B7 [Gew.-%] |
|---|---|---|---|
| Basisfluid (Nexbase® 3030) | | | |
| (Nexbase® 3043) | 46,72 | 46,2 | 46,2 |
| Alkydharz (Worleekyd® SD 8300) | 6 | 6 | 6 |
| überbasisches Calciumsulfonat (Arcot® 645) | 15,66 | 15,18 | 15,18 |
| Füller/Pigment, CaCO3 (Omyacarb® 2-AL) | 24,56 | 24,56 | 24,56 |
| alkalische Verbindung, ZnO (Bayoxide® Z active) | 2 | 2 | 2 |
| Katalysator, Sikkativ (Borchi® Oxy-Coat 1410) enthält 10 % Katalysatorkomplex | 0,05 | 0,05 | 0,05 |
| Schichtsilikate (Baragel® 3000) | - | - | - |
| Quellmittel (Propylencarbonat, Jeffsol® PC) | - | - | - |
| Leitungswasser | - | - | - |
| Esterwachs (Kahlwax 6607L) | 5 | 5 | 5 |
| Paraffinwachs (Sasolwax 3279) | - | - | - |
| Farbstoff (Tinopal®) | 0,01 | 0,01 | 0,01 |
| Geruchsfänger Adsorptionsmittel (ZEOflair® 100) | - | 1 | |
| Reaktionsmittel (Malonamid) | | | 1 |
| Summe | 100 | 100 | 100 |

**Tabelle 5: Beispiele B8 und B9 für erfindungsgemäße Zusammensetzungen**

| | B8 [Gew.-%] | B9 [Gew.-%] |
|---|---|---|
| Basisfluid (Nexbase® 3030) | 49,5 | |
| (Nexbase® 3043) | | 45,74 |
| Alkydharz (Worleekyd® SD 8300) | 6 | |
| (Bremar RK® 7046) | | 6 |
| überbasisches Calciumsulfonat (Arcot® 645) | 16 | 16 |
| Füller/Pigment, CaCO3 (Omyacarb® 2-AL) | 25 | 25,4 |
| alkalische Verbindung, ZnO (Bayoxide® Z active) | 2 | 2 |
| Katalysator, Sikkativ (Borchi® Oxy-Coat 1410) | 0,05 | 0,05 |
| enthält 10 % Katalysatorkomplex | | |
| Schichtsilikate (Baragel® 3000) | 1,2 | 4 |
| Quellmittel (Propylencarbonat, Jeffsol® PC) | 0,228 | 0,76 |
| Leitungswasser | 0,012 | 0,04 |
| Esterwachs (Kahlwax 6607L) | - | - |
| Paraffinwachs (Sasolwax 3279) | - | - |
| Farbstoff (Tinopal®) | 0,01 | 0,01 |
| Summe | 100 | 100 |

**Tabelle 6: Kurzbeschreibung der erfindungsgemäßen Zusammensetzungen B2 bis B9**

| | Eigenschaften |
|---|---|
| B2 | niedrigviskos, mit Wachs/kein Schichtsilikat |
| B3 | mittelviskos, mit Wachs/mit Schichtsilikat |
| B4 | mittelviskos, mit Wachs/mit Schichtsilikat, erhöhte Kaltverfestigung nach Erwärmen (höherer Wachs-, geringerer Schichtsilikatanteil als B3) |
| B5 | niedrig-viskos, mit Wachs/kein Schichtsilikat |
| B6 | niedrig-viskos, mit Wachs/kein Schichtsilikat, mit Geruchsfänger adsorptiv |
| B7 | niedrig-viskos, mit Wachs/kein Schichtsilikat, mit Geruchsfänger reaktiv |
| B8 | hoch-viskos, ohne Wachs/mit Schichtsilikat |
| B9 | sehr hochviskos, ohne Wachs/mit Schichtsilikat |

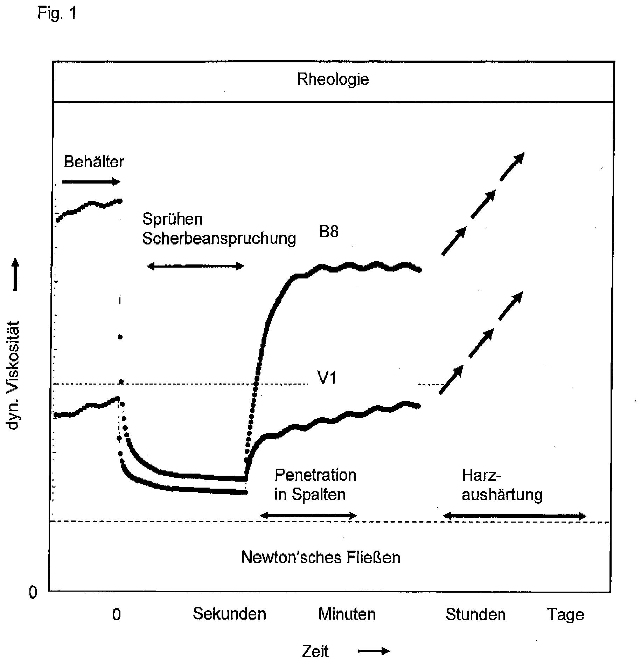

**Fig. 1** verdeutlicht das rheologische Verhalten des erfindungsgemäßen Korrosionsschutzmittels B8, das zur Verbesserung der Wärmestabilität Schichtsilikat aufweist, gegenüber der herkömmlichen Zusammensetzung V1, bei der eine Wachsmischung unterschiedlicher Wachse für eine verbesserte Ablaufhemmung sorgt. Aus Fig. 1 wird ersichtlich, dass beide Zusammensetzungen, die erfindungsgemäße B8 und die herkömmliche V1, thixotropes Verhalten zeigen: Die dynamische Viskosität wird bei Scherbeanspruchung deutlich verringert, sodass die Zusammensetzungen auch bei Raumtemperatur versprüht werden können. Nach dem Versprühen nimmt die Viskosität infolge des Nachlassens der Scherbeanspruchung innerhalb von Sekunden, während Penetration in Spalten stattfindet, wieder zu und es tritt Ablaufhemmung ein, bevor nach einigen Stunden die Harzaushärtung beginnt. Der Unterschied zwischen der erfindungsgemäßen Zusammensetzung B8 und der herkömmlichen Zusammensetzung V1 liegt in der deutlich größeren Viskositätsdifferenz zwischen Ruhephase und Scherphase, wobei die Ruheviskosität der erfindungsgemäßen Zusammensetzung B8 deutlich größer ist als die der herkömmlichen Zusammensetzung V1, während die Scherviskositäten in ähnlichen Bereichen liegen, sodass die erfindungsgemäße Zusammensetzung B8 genauso gut versprühbar ist und in Spalten penetrieren kann, wie die herkömmliche Zusammensetzung V1. Hingegen weist die erfindungsgemäße Zusammensetzung B8 aufgrund des höheren Anstiegs der Viskosität nach erfolgter Applikation eine deutlich geringere Ablaufneigung auf.

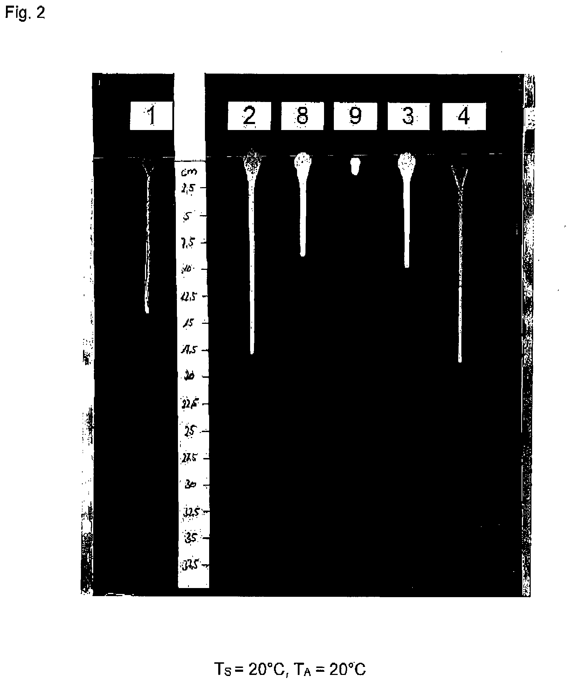

In **Fig. 2** bis **4** sind drei fotografische Abbildungen von Ablauftests eines herkömmlichen Korrosionsschutzmittels V1 und unterschiedlicher erfindungsgemäßer Korrosionsschutzmittel (B2, B8, B9, B3 und B4) bei unterschiedlichen Applikations- und Substrattemperaturen gezeigt. Zu jeder Abbildung ist ein zugehöriger Maßstab angegeben.

Die Durchführung der Ablauftests zur Bestimmung des rheologischen Verhaltens umfasst die folgenden Schritte:
1. Es wird eine vorbestimmte Menge, z. B. 200 g, des jeweiligen Korrosionsschutzmittels (V1, B2, B8, B9, B3, B4) bei einer vorbestimmten Applikationstemperatur T_{A} (hier 20 °C) bei einer vorbestimmten Drehzahl (hier 300 min⁻¹) gerührt.
2. Es wird ein Substrat, z. B. ein Metallblech, in horizontaler Position bei einer vorbestimmten Substrattemperatur T_{S} (hier 20 °C oder 60 °C) bereitgestellt.
3. Mit einer Pipette oder einer anderen geeigneten Probenahmevorrichtung wird jeweils ein vorbestimmtes Volumen des jeweiligen Korrosionsschutzmittels (hier 200 µl) aufgenommen und vertikal auf die horizontale Probenblechoberfläche aufbracht.
4. Das Probenblech wird nach einer vorbestimmten Zeitdauer (hier 7 Sekunden) aus der horizontalen in eine vertikale Blechposition aufgerichtet.
5. Das Ablaufen des Korrosionsschutzmittels wird beobachtet und/oder gemessen.
6. Nach eine vorbestimmten Ablaufzeit (hier 10 Minuten) werden fotografischen Abbildungen aufgenommen.

Auf jedem Probenblech sind links des Maßstabs eine Probe der herkömmlichen Zusammensetzung V1 und rechts des Maßstabs jeweils fünf Proben erfindungsgemäßer Korrosionsschutzmittel (von links nach rechts) B2, B8, B9, B3 und B4 aufgebracht, deren Zusammensetzungen oben aufgeführt sind. Die herkömmliche Zusammensetzung V1 unterscheidet sich in erster Linie durch die Anteile an Basisfluid (33,49 Gew.-% in Summe), Alkydharz (22 Gew.-%) und Wachs (9 Gew.-% in Summe) von den erfindungsgemäßen Zusammensetzungen, die zwischen 45 und 49,5 Gew.-% Basisfluid, 6 Gew.-% Alkydharz und 0 bis 5 Gew.-% Wachs und/oder 0 bis 4 Gew.-% Schichtsilikat aufweisen, während die Anteile an Sulfonatkomponente (15-16 Gew.-%) und Füller (20-25,4 Gew.-%) ähnlich sind.

Hauptunterschiede der erfindungsgemäßen Zusammensetzungen untereinander liegen in erster Linie in den unterschiedlichen Anteilen an Schichtsilikat und Wachs: B2 enthält kein Schichtsilikat, aber 1,5 Gew.-% Paraffinwachs und weist zudem einen etwas höheren Anteil an Basisfluid (Nexbase 3030) auf, dessen Viskosität und Viskositätsindex etwas kleiner sind als die Viskosität und der Viskositätsindex des Basisfluids (Nexbase 3043) der anderen erfindungsgemäßen Zusammensetzungen. Zusammensetzung B8 enthält 1,2 Gew.-% Schichtsilikat, aber kein Wachs, B9 enthält 4 Gew.-% Schichtsilikat und kein Wachs, B3 enthält 1 Gew.-% Schichtsilikat und 2 Gew.-% Esterwachs und B4 enthält 0,4 Gew.-% Schichtsilikat und 5 Gew.-% Esterwachs.

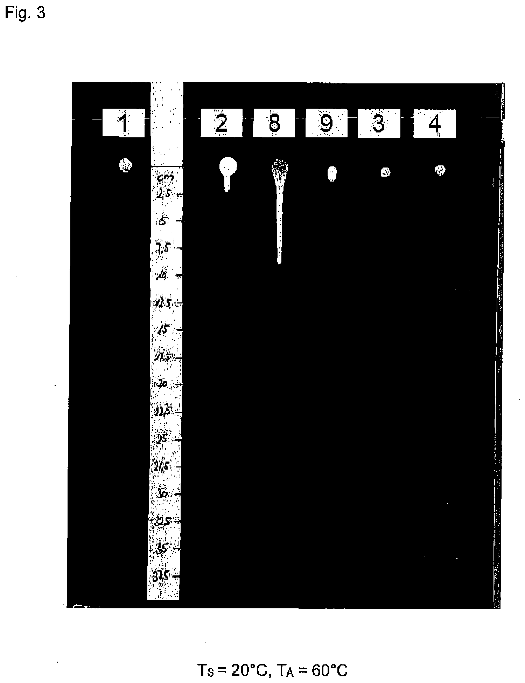

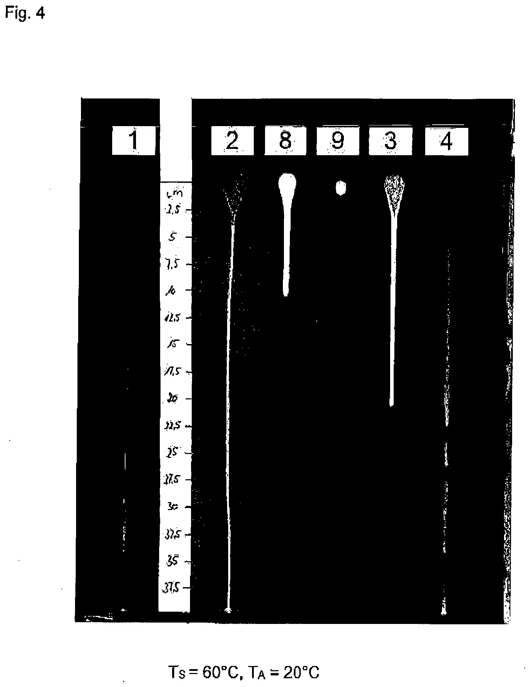

Die vorbestimmten Applikationstemperaturen T_{A} (20 °C oder 60 °C) und Blechtemperaturen T_{S} (20 °C oder 60 °C) sind unter jeder Abbildung angegeben: In der Abbildung von **Fig. 2** hat das Metallblech eine Temperatur T_{S} von 20 °C, wobei die Korrosionsschutzmittel V1, B2, B8, B9, B3, B4 mit T_{A} = 20 °C aufgebracht wurden. Auf der Abbildung in **Fig. 3** hat das Metallblech eine Temperatur Ts von 20 °C und die Korrosionsschutzmittel V1, B2, B8, B9, B3, B4 wurden mit T_{A} = 60 °C aufgebracht. Auf der Abbildung in **Fig. 4** hat das Probenblech eine Temperatur T_{S} von 60 °C, wobei die V1, B2, B8, B9, B3, B4 wiederum mit T_{A} = 20 °C aufgebracht wurden. Zur Beurteilung des Ablaufverhaltens kann der Maßstab berücksichtigt werden, der jeweils auf dem Probenblech angegeben ist.

Es ergibt sich, dass sich die Ablaufstrecken der Zusammensetzungen B8 und B9, die kein Wachs enthalten, voneinander unterscheiden, aber das Ablaufverhalten der Zusammensetzung B8 oder B9 in allen drei Versuchen (**Fig. 2****,** **3** **und** **4**) jeweils ähnlich ist, wobei Zusammensetzung B8 eine Ablaufstrecke von 7,5 bis 10 cm und Zusammensetzung B9 eine Ablaufstrecke von weniger als 2,5 cm zeigen. Das Ablaufverhalten der wachsfreien Zusammensetzungen B8 und B9, die Schichtsilikat enthalten, ist weithingehend nicht von der Applikationstemperatur T_{A} oder der Blechtemperatur T_{S} abhängig. Im Unterschied dazu zeigen die Zusammensetzungen B2, B3, B4, die Wachse enthalten, wie auch das Vergleichsbeispiel V1 unterschiedliches Ablaufverhalten bei unterschiedlichen Applikationstemperaturen T_{A} und Blechtemperaturen T_{S}.

**Fig. 2** **und** **4** zeigen, dass das Ablaufverhalten der wachshaltigen Zusammensetzungen B2, B3, B4 und V1 bei gleichbleibender Applikationstemperatur T_{A} = 20 °C von der Substrattemperatur abhängig ist. Dabei ähnelt das Ablaufverhalten der Zusammensetzung B4, die 5 Gew.-% Esterwachs (Schmelzbereich 74 und 80 °C) und 0,4 Gew.-% Schichtsilikat enthält, dem Ablaufverhalten der Zusammensetzung B2, die mit 1,5 Gew.-% Paraffinwachs (Schmelzbereich 76 bis 82 °C) deutlich weniger Wachs, aber kein Schichtsilikat enthält: So liegen bei einer Substrattemperatur T_{S} = 20 °C (**Fig. 2**) die Ablaufstrecken der Zusammensetzungen B2 und B4 bei etwa 17,5 cm. Die mit höherem Wachsanteil zunehmende Ablaufneigung kann somit durch Zugabe von Schichtsilikat ausgeglichen werden. Die trotz des noch höheren Wachsanteils von 9 Gew.-% etwas kürzere Ablaufstrecke des Vergleichsbeispiels V1 im Bereich von 12,5 bis 15 cm kann auf dessen deutlich niedrigeren Anteil an Basisfluid zurückgeführt werden. Die erfindungsgemäße Zusammensetzung B3 hingegen weist mit 2 Gew.-% Wachs einen ähnlichen Wachsanteil wie B2 auf, enthält aber zudem noch 1 Gew.-% Schichtsilikat, das für die gegenüber B2 verbesserte Ablaufhemmung sorgt, wie die Ablaufstrecke von etwa 10 cm für B3 zeigt, die im Bereich der Ablaufstrecke von B8 liegt, das kein Wachs, aber mit 1,2 Gew.-% Schichtsilikat einen ähnlichen Schichtsilikatanteil wie B3 aufweist. Folglich wird bei gleicher Substrat- und Applikationstemperatur T_{S}, T_{A} von 20 °C das Ablaufverhalten eher durch den Schichtsilikatanteil als durch den Wachsanteil beeinflusst.

Bei unterschiedlichen Temperaturen T_{S}, T_{A} von Substrat und Applikation spielt der Wachsanteil eine größere Rolle. Bei einer Substrattemperatur T_{S} = 60 °C (**Fig. 4**) und Applikationstemperatur T_{A} = 20 °C zeigen die erfindungsgemäßen Zusammensetzungen B2 und B4, die kein bzw. nur wenig Schichtsilikat enthalten, wie die Vergleichszusammensetzung V1 quasi keine Ablaufhemmung; dabei erstrecken sich die Ablaufstrecken von mehr als 37,5 cm über das gesamte Probenblech, d. h. die Proben sind während der Versuchsdauer von 10 min vom Probenblech abgetropft. Hingegen zeigt die Probe B3 mit dem Schichtsilikatanteil von 1 Gew.-% eine - insbesondere im Vergleich mit B2, die einen ähnlichen Wachsanteil, aber kein Schichtsilikat aufweist - verbesserte Ablaufhemmung mit einer Ablaufstrecke von etwa 20 cm. Allerdings ist damit die Ablaufstrecke der B3 deutlich länger als die etwa 10 cm Ablaufstrecke der Zusammensetzung B8, die mit 1,2 Gew.-% einen Schichtsilikatanteil ähnlich dem der B3, aber kein Wachs aufweist.

Werden die Zusammensetzungen V1, B2, B8, B9, B3, B4 mit erhöhter Applikationstemperatur T_{A} = 60 °C auf ein kaltes Blech Ts = 20 °C aufgebracht (**Fig. 3**), zeigen die wachslosen Zusammensetzungen B8 und B9 das gleiche Ablaufverhalten wie in den anderen beiden Versuchen mit Ablaufstrecken von 7,5-10 cm (B8) und weniger als 2,5 cm (B9), wobei die auftretende Ablaufhemmung von dem Schichtsilikatanteil abhängig ist. Die wachshaltigen Zusammensetzungen V1, B2, B3, B4 zeigen bis auf B2 quasi unmittelbar eintretende Ablaufhemmung, d. h. erstarren nach Applikation ohne abzulaufen. Und Zusammensetzung B2, die mit 1,5 Gew.-% den geringsten Wachsanteil aufweist, zeigt lediglich eine kurze Ablaufstrecke von weniger als 2,5 cm, d. h., dass auch hier Ablaufhemmung kurz nach Applikation eintritt. In diesem Versuch tritt bei den wachshaltigen Zusammensetzungen der sogenannte Drop-Stopp-Effekt auf, bei dem die im Korrosionsschutzmittel vorliegenden Wachse durch die erhöhte Applikationstemperatur gelöst vorliegen, sodass es bei der Applikation auf dem vergleichsweise kalten Blech in einer Art Abschreckung zu einer raschen Verfestigung bzw. Gelbildung kommt.

Die Ablauftests zeigen, dass das Ablaufverhalten des erfindungsgemäßen Korrosionsschutzmittels sich durch die Anteile an Schichtsilikat und Wachs gezielt auf die in der Anwendung vorgesehenen Substrat- und Applikationstemperaturen einstellen lässt. Während ein Korrosionsschutzmittel, das Schichtsilikat und kein Wachs enthält, ein nahezu temperaturunabhängiges Ablaufverhalten aufweist, zeigen Korrosionsschutzmittel mit Wachsen ein Ablaufverhalten, das bei gleicher Substrat- und Applikationstemperatur Ts, T_{A} von 20 °C eher durch den Schichtsilikatanteil als durch den Wachsanteil beeinflusst wird. Bei Kaltapplikation auf einem erwärmten Substrat hingegen führen höhere Wachsanteile zu deutlich schlechterem Ablaufverhalten, was aber durch Zugabe von Schichtsilikat zumindest teilweise ausgeglichen werden kann. Zusammensetzungen ohne Schichtsilikat zeigen in dieser Applikationskonstellation mit Kaltapplikation auf erwärmtem Substrat wenig bis keine Ablaufhemmung. Bei Applikation auf einem erwärmten Substrat bzw. Blech hingegen hat die Applikationstemperatur der wachshaltigen Zusammensetzungen des Korrosionsschutzmittels geringeren Einfluss auf das Ablaufverhalten als die Anteile von Schichtsilikat und Wachs in der jeweiligen Zusammensetzung, da hierbei die wachshaltigen Zusammensetzungen einen Drop-Stopp-Effekt zeigen, während die Ablaufhemmung bei Zusammensetzungen ohne Wachs im Wesentlichen vom Schichtsilikatanteil abhängig ist.

So lassen sich die rheologisch wirksamen Komponenten des erfindungsgemäßen Korrosionsschutzmittels einteilen in die Strukturgeber:
- Newton'sche Fluide (z. B. Basisfluid), deren Viskosität nicht von Temperatur oder Scherung abhängt, weshalb Gruppe-III-Grundöle mit einem hohen Viskositätsindex von mehr als 100, vorzugsweise mehr als 120 bevorzugt sind;
- anorganische Komponenten (z. B. Calciumcarbonat Füllstoff) mit scherungsabhängiger Viskosität, aber kein Einfluss der Temperatur;
- aktiviertes (aufgeschlossenes) Schichtsilikat als strukturviskose Komponente, die eine stark scherungsabhängige Viskosität bedingt, ohne wesentliche Viskositätsveränderung bei kurzfristiger Temperaturbeaufschlagung;
- Paraffin- und/oder Esterwachs mit temperaturabhängiger Viskosität für eine temperaturabhängige Filmhärtung und verbesserte Filmstabilität nach abgeschlossener Wärmeeinwirkung;
- (chemisch) reaktive Komponenten (z. B. Alkydharz), die als nicht reagierte Ausgangskomponente eher Newton'sches Verhalten zeigt, aber nach Polymerisation zu Strukturviskosität mit starkem Anstieg der Viskosität führt, wobei dieser Effekt mit deutlicher Zeitverzögerung (1-3 Tage) im Vergleich zu den obigen physikalischen Effekten auftritt.

Durch eine entsprechende Wahl der Verhältnisse dieser Strukturgeber kann das gewünschte anwendungstechnische rheologische Verhalten eingestellt werden: Nachfließen nach Aufsprühen/Penetration in Spalten, Versprühbarkeit, Wärmestabilität des Films, mechanische Stabilität des Film, etc.

Damit kann für jeden Produktionsvorgang, bei dem ein Hohlraum eines Bauteil mit einem Korrosionsschutzmittel versiegelt werden soll, ein auf die auftretenden Temperaturbedingungen abgestimmtes Korrosionsschutzmittel bereitgestellt werden, so dass es optimal versprüht werden und in Spalten eindringen kann, bevor der gebildete Film zu gelieren beginnt und aushärtet, sodass in nachfolgenden Prozessschritten kein Korrosionsschutzmittel aus dem Bauteil mehr austritt, unabhängig von den dann auftretenden Temperaturen. Je nach spezifischer Anforderung eines Anwenders, beispielsweise eines Autoherstellers, können die rheologischen Eigenschaften des Korrosionsschutzmittels gezielt eingestellt werden. In der Regel fordern die Anwender Autohersteller Filmstabilitäten bei 90 bis 105 °C. Für die Wärmestabilität bis ca. 70 °C sorgt der Wachsanteil (durch Lösen/Gelieren), bei höheren Temperaturen wird der applizierte Film durch das polymerisierte Alkydharz stabilisiert.

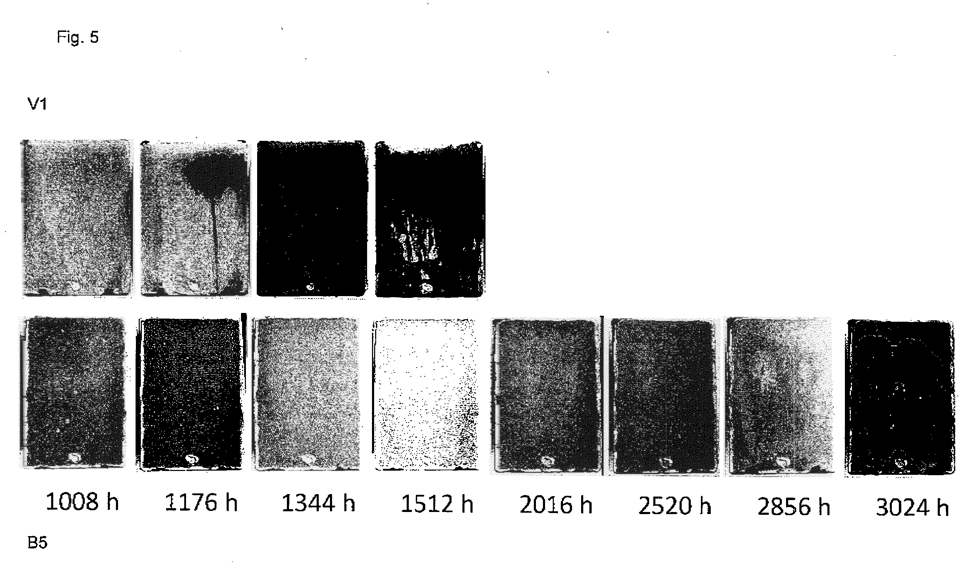

**Fig. 5** verdeutlicht die verbesserten Korrosionsschutzeigenschaften eines erfindungsgemäßen Korrosionsschutzmittels B5 (siehe Tabelle 4) gegenüber der herkömmlichen Zusammensetzung V1 (Tabelle 2). Zum Korrosionstest wurden Salzsprühtests gemäß DIN EN ISO 9227 NSS durchgeführt. Als Substrat wurden Stahlbleche Q-Blech R46 gewählt, die mit einer Beschichtungsdicke von 50 µm des jeweiligen Korrosionsschutzmittels V1 und B5 beschichtet wurden.

Die obere Reihe in **Fig. 5** zeigt vier Abbildungen eines Blechs, das mit der Zusammensetzung V1 beschichtet wurde, nach 1008 h, 1176 h, 1344 h und 1512 h Salzsprühtest. Bereits nach 1176 h sind deutliche Korrosionserscheinungen festzustellen. Nach 1512 h zeigt das mit V1 beschichtete Blech flächige Korrosion, sodass der Test beendet wurde. In der unteren Reihe sind acht Abbildungen eines Blechs gezeigt, das mit der erfindungsgemäßen Zusammensetzung B5 beschichtet wurde. Dort zeigt sich nach 1512 h noch keine Korrosion. Ab 2016 h Salzsprühtest treten Korrosionserscheinungen am linken Rand des Blechs auf, die nach 2520 h und 2856 h aber nur mäßig zunehmen. Flächendeckende Korrosion tritt bei dem mit dem erfindungsgemäßen Korrosionsschutzmittel B5 beschichteten Blech im Salzsprühtest erst nach 3024 h auf. Da beide Zusammensetzungen B5, V1 mit 15,66 bzw. 15,0 Gew.-% vergleichbare Anteile an überbasischem Calciumsulfonat als Korrosionsschutzkomponente aufweisen, ist dieser deutliche Unterschied überraschend, zumal V1 mit in Summe 9 Gew.-% Wachs, das ebenfalls zum Korrosionsschutz beiträgt, sogar noch mehr Wachs enthält als B5 mit 5 Gew.-% Esterwachs. Die gravierende Verbesserung des Korrosionsschutzes der erfindungsgemäßen Zusammensetzung B5 wird durch den deutlich verringerten Alkydharzanteil (6 Gew.-% anstelle von 22 Gew.-%), den Zusatz von 2 Gew.-% Zinkoxid als alkalische Säurefängerkomponente zusammen mit dem alternativ eingesetzten Füller Calciumcarbonat (24,56 Gew.-%) anstelle von Calciumsulfat (eingesetzt in V1 mit 20,0 Gew.-%) erreicht. Nicht abgebildet sind Abbildungen weiterer Testreihen mit weiteren Beispielen des erfindungsgemäßen Korrosionsschutzmittels. Es hat sich aber gezeigt, dass die Korrosionstests für alle Beispiele ähnlich gut ausfallen. Es ergibt sich dabei etwa eine Verdoppelung der Schutzdauer im Salzsprühtest ISO 9227 NSS.

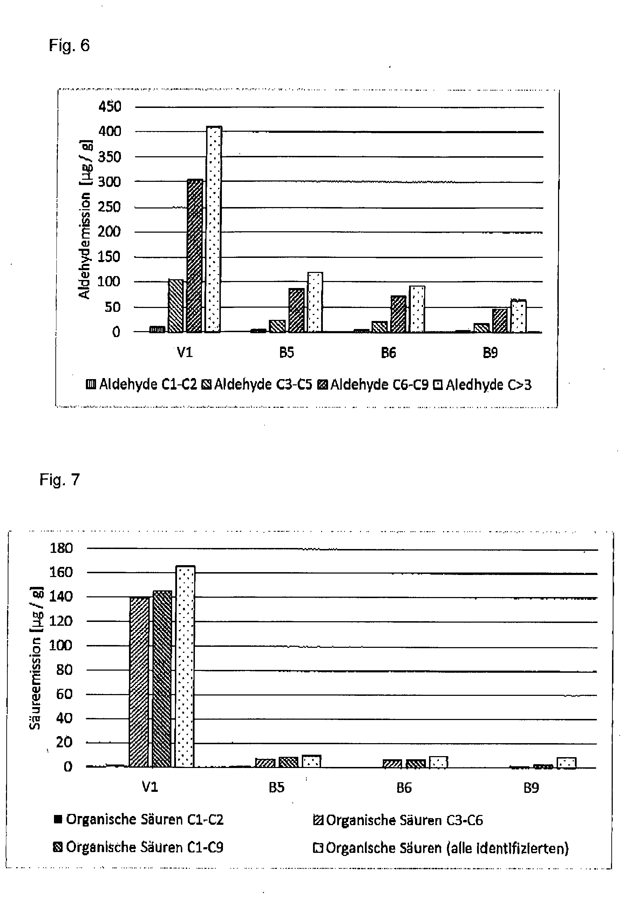

**Fig. 6 bis 8** zeigen Diagramme zu den Emissionen (Emissionsmessungen nach ISO 16000-3) des herkömmlichen Korrosionsschutzmittels V1 (siehe Tabelle 2) im Vergleich zu erfindungsgemäßen Korrosionsschutzmitteln B5, B6 und B9 (siehe Tabellen 4 und 5). Zur Minderung des Geruchs und der Emissionen von flüchtigen organischen Verbindungen wie Aldehyden und kurzkettigen organischen Säuren tragen der deutlich verringerte Anteil an Alkydharz (6 Gew.-% in den erfindungsgemäßen Beispielen gegenüber 22 Gew.-% in der herkömmlichen Zusammensetzung V1) sowie der Verzicht auf Antihautmittel in allen erfindungsgemäßen Beispielen bei.

Ferner werden in den erfindungsgemäßen Zusammensetzungen emissionsarme Alkydharze wie WorleeKyd® SD 8300 (B5, B6) mit einem nichtflüchtigen Anteil von zumindest 98 Gew.-% oder Bremar® RK 7046 (B9) mit einem Festkörpergehalt von 100 Gew.-% eingesetzt, wohingegen in herkömmlichen Korrosionsschutzmitteln Alkydharze wie Synolac® verwendet werden, die einen nichtflüchtigen Anteil von lediglich 50 bis 75 Gew.-% aufweisen und in Lösungsmitteln wie Xylol, Testbenzin vorliegen.

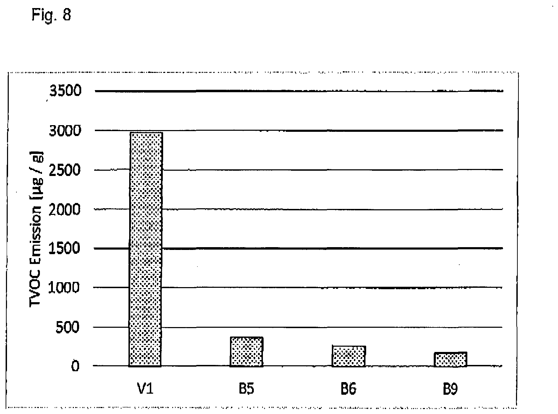

Dies schlägt sich deutlich in den TVOC-Emissionen (total volatile organic compounds, d. h. Summe der flüchtigen organischen Verbindungen) nieder, die in **Fig. 8** in einem Säulendiagramm für das herkömmliche Korrosionsschutzmittel V1 im Vergleich zu den erfindungsgemäßen Korrosionsschutzmitteln B5, B6 und B9 aufgetragen sind: Die herkömmliche Zusammensetzung V1 zeigt mit 2.977 µg/g mehr als das sechsfache an TVOC-Emissionen wie die erfindungsgemäßen Zusammensetzungen B5 (367 µg/g), B6 (258 µg/g) und B9 (167 µg/g), d. h. die erfindungsgemäßen Zusammensetzungen B5, B6 bzw. B9 weisen nur noch 12 %, 8,7 % bzw. 5,6 % der Emissionen bezogen auf V1 auf. Die unterschiedlichen Emissionswerte der erfindungsgemäßen Zusammensetzungen lassen sich zum einen auf den Zusatz an Adsorptionsmittel (ZEOflair®) als Geruchsfänger in B6 gegenüber der ansonsten gleichen Zusammensetzung B5 und zum anderen auf ein alternatives Alkydharz in B9 (Bremar® RK 7046 anstelle WorléeKyd® SD 8300) zurückführen.

Auch die Ergebnisse für die Aldehydemissionen und die Emissionen organischer Säuren, die bei der Aushärtung des Alkydharzes gebildet werden, zeigen eine deutliche Reduktion für die erfindungsgemäßen Beispielzusammensetzungen B5, B6 und B9 gegenüber der herkömmlichen Zusammensetzung V1.

Das Säulendiagramm in **Fig. 6** zeigt die Aldehydemissionen, aufgegliedert in C1-C2-Aldehyde, C3-C5-Aldehyde, C6-C9-Aldehyde und Summe der Aldehyde mit C>3 jeweils für die Vergleichszusammensetzung V1 und die Beispielzusammensetzungen B5, B6 und B9. Zwar weist auch bereits V1 mit 10,2 µg/g niedrige Emissionen bei den C1- und C2-Aldehyden auf, die aber von den erfindungsgemäßen Zusammensetzungen B5 (4,6 µg/g), B6 (4,4 µg/g) und B9 (2,3 µg/g) noch unterschritten werden. Noch deutlicher fällt die Reduktion der Emissionen für die C3-C5-Aldehyde von 104,7 µg/g für V1 auf 22 %, 20 % und 16 % für B5, B6 und B9, bezogen auf V1, und für die C6-C9-Aldehyde von 304 µg/g für V1 auf 28 %, 23 % und 15 % für B5, B6 und B9, bezogen auf V1, aus. In Summe wird die Emission der Aldehyde mit C>3 von 410,2 µg/g für V1 auf knapp 30 % (118,6 µg/g für B5), 23 % (92,4 µg/g für B6) bzw. 16 % (64 µg/g für B9), bezogen auf V1, reduziert. Abgesehen von der deutlichen Verringerung der Aldehydemissionen gegenüber der Vergleichszusammensetzung V1 aus dem Stand der Technik wird ersichtlich, dass der Zusatz des Adsorptionsmittels in B6 und der Einsatz eines alternativen Alkydharzes in B9 zu weiteren Verringerungen führt, wobei die größere Reduzierung durch den Einsatz des alternativen Alkydharzes erreicht wird.

Ähnliches zeigt das Säulendiagramm in **Fig. 7**, in dem die Säureemissionen in C1-C2-Säuren, C3-C6 organische Säuren, Summe der C1-C9 organische Säuren und Summe aller organischer Säuren jeweils für die Vergleichszusammensetzung V1 und die Beispielzusammensetzungen B5, B6 und B9 aufgegliedert sind. Der bereits für V1 niedrige Emissionswert der C1- und C2-Säuren von 1,9 µg/g kann durch die erfindungsgemäßen Beispiele B5, B6 und B9 auf 0,2 µg/g (B5), 0,09 µg/g (B6) und 0,1 µg/g (B9) reduziert werden. Für die organischen Säuren mit C3-C6 zeigt sich eine deutlichere Emissionsreduktion, ebenso wie für die Säuren mit C1-C9 und alle identifizierten organischen Säuren. Gegenüber 139 µg/g Emission von C3-C6 organischen Säuren durch V1 werden für die erfindungsgemäßen Beispielzusammensetzungen B5, B6 und B9 nur noch 6,87 µg/g (5%), 6 µg/g (4,3 %) und 1,1 µg/g (0,8 %) gemessen (Prozentangaben bezogen auf V1-Wert). Ein ähnliches Bild ergibt sich für die C1-C9 organischen Säuren, für die für V1 ein Wert von 144,9 µg/g und für B5, B6 und B9 Werte von 8,17 µg/g, 6,3 µg/g und 2,3 µg/g gemessen wurde, was bezogen auf den V1-Wert 5,6 %, 4,3 % und 1,6 % entspricht. Für alle identifizierten organischen Säuren wurden für V1 ein Wert von 165,4 µg/g und für B5, B6 und B9 Werte von 9,3 µg/g, 8,9 µg/g und 8,4 µg/g gemessen, was bezogen auf den V1-Wert 5,6 %, 5,4 % und 5,1 % entspricht.

Bei den C1-C2-Säuren werden mit Zusammensetzung B6, die das Adsorptionsmittel ZEOflair® enthält, die geringsten Emissionen erreicht, allerdings nur geringfügig weniger als mit B9, die im Vergleich zu B5 und B6 ein alternatives Alkydharz aufweist. In Bezug auf die weiteren Säureemissionen, insbesondere die C3-C6 Säuren, aber auch C1-C9 Säuren, zeigt die Beispielzusammensetzung B6 geringere Emissionen als die Beispielzusammensetzung B5 ohne Adsorptionsmittel, und die Beispielzusammensetzung B9, die das alternative Alkydharz aufweist, zeigt noch deutlicher reduzierte Emissionswerte, während die Gesamtemissionen aller identifizierten organischen Säuren für die drei erfindungsgemäßen Zusammensetzungen B5, B6 und B9 in einem ähnlichen Bereich liegen. Damit führt zwar der Einsatz des alternativen Alkydharzez in B9 zu höheren Emissionen von organischen Säuren > C9 als das Alkyharz der Beispiele B5 und B6, allerdings sind die Emissionen dieser längerkettigen und weniger volatilen Komponenten für den Geruch weniger relevant.

Beispielzusammensetzung B7, die sich von B6 lediglich dadurch unterscheidet, dass als Geruchsfängerkomponente das Reaktionsmittel Malonamid anstelle dem Adsorptionsmittel ZEOflair® eingesetzt wird, zeigt ähnliche Emissionsergebnisse wie B6, weshalb sie hier nicht gesondert dargestellt und erläutert werden.

## Patentansprüche

1. Korrosionsschutzmittel zur Hohlraumkonservierung, das eine Basiszusammensetzung aus
40 bis 50 Gew.-% Basisfluid,
3 bis 10 Gew.-% Alkydharz,
10 bis 20 Gew.-% Sulfonat- und/oder Salicylatkomponente,
15 bis 25 Gew.-% Füller,
0,003 bis 0,007 Gew.-% Sikkativ-Katalysator,
jeweils bezogen auf die Gesamtmasse des Korrosionsschutzmittels, aufweist,
und das ferner zur Einstellung der rheologischen Eigenschaften des Korrosionsschutzmittels
1 bis 5 Gew.-% Schichtsilikat
und/oder
1 bis 8 Gew.-% Esterwachs und/oder Paraffinwachs,
jeweils bezogen auf die Gesamtmasse des Korrosionsschutzmittels, aufweist, wobei das Korrosionsschutzmittel keine aminischen Korrosionschutz- oder Bindemittelkomponenten und kein Antihautmittel aufweist.

2. Korrosionsschutzmittel nach Anspruch 1,
**dadurch gekennzeichnet, dass**
die Basiszusammensetzung ferner
0,5 bis 5 Gew.-%, bevorzugt 1 bis 3 Gew.-%, alkalische Säurefängerkomponente aufweist, die aus einer Gruppe ausgewählt ist, die Alkali- und Erdalkalisalze, bevorzugt deren Phosphate, Carbonate, Silikate, Hydroxide, Oxide, und Sulfonate, bevorzugt überbasische Sulfonate, sowie Zirkonphosphat und Zinkoxid aufweist, wobei Zinkoxid bevorzugt ist; und/oder
0,1 bis 5 Gew.-%, bevorzugt 0,5 bis 2,5 Gew.-%, Geruchsfängerkomponente aufweist, die aus Adsorptionsmittel für Aldehyde, umfassend Zeolithe, und reaktive Komponenten zur Umsetzung von Aldehyden, umfassend Amide, ausgewählt ist, und/oder
0,001 bis 0,05 Gew.-%, bevorzugt 0,01 Gew.-%, Farbstoffadditiv aufweist, bevorzugt ein fluoreszierendes Farbstoffadditiv,
jeweils bezogen auf die Gesamtmasse des Korrosionsschutzmittels.

3. Korrosionsschutzmittel nach Anspruch 1 oder 2,
**dadurch gekennzeichnet, dass**
das Korrosionsschutzmittel in Abhängigkeit des Anteils des Schichtsilikats zumindest eine polare Quellmittelkomponente mit zumindest einer Carbonyl- und/oder Hydroxylgruppe aufweist, wobei die polare Quellmittelkomponente aus einer Gruppe ausgewählt ist, die Wasser, kurzkettige Alkohole, bevorzugt Methanol, Ethanol, Ester, bevorzugt Propylencarbonat, und Ketone, bevorzugt Aceton, sowie Mischungen davon aufweist,
wobei ein Anteil der zumindest einen polaren Quellmittelkomponente in einem Bereich von 10 bis 30 Gew.-%, bevorzugt in einem Bereich von 17 bis 23 Gew.-%, bezogen auf die Masse des Schichtsilikats liegt, und wobei besonders bevorzugt das Korrosionsschutzmittel in Abhängigkeit des Anteils des Schichtsilikats 0,019 bis 1,33 Gew.-%, bevorzugt 0,19 bis 0,95 Gew.-%, Quellmittelkomponente, bevorzugt Propylencarbonat, und
0,005 bis 0,07 Gew.-%, bevorzugt 0,01 bis 0,05 Gew.-%, Wasser,
jeweils bezogen auf die Gesamtmasse des Korrosionsschutzmittels, aufweist.

4. Korrosionsschutzmittel nach zumindest einem der Ansprüche 1 bis 3,
**dadurch gekennzeichnet, dass**
- das Basisfluid ein unpolares Lösungsmittel, bevorzugt ein Gruppe-II-, Gruppe-III- oder Gruppe-IV-Grundöl mit einer kinematischen Viskosität (40 °C) im Bereich von 5 bis 40 mm²/s, bevorzugt von 10 bis 30 mm²/s, oder ein polares Lösungsmittel ist, das aus einer Gruppe umfassend Wasser, Methanol, Ethanol, andere kurzkettige Alkohole, Aceton sowie Mischungen davon, ausgewählt ist; und/oder
- das Alkydharz ein geruchs- und emissionsarmes, niedrigviskoses, nicht wassermischbares und lufttrocknendes Alkydharz ist, das bevorzugt langölig ist und einen nichtflüchtigen Anteil von zumindest 98 % aufweist und eine dynamische Viskosität (20 °C) von 500 bis 12.000 mPas, bevorzugt von 1.000 bis 6.000 mPas, aufweist; und/oder
- die Sulfonat- und/oder Salicylatkomponente aus einer Gruppe umfassend überbasisches Calciumsulfonat, überbasisches Magnesiumsulfonat und überbasisches Calciumsalicylat und Mischungen davon ausgewählt ist, wobei thixotropes überbasisches Cacliumsulfonat bevorzugt ist; und/oder
- der Füller aus einer Gruppe umfassend Carbonat, hiervon bevorzugt Calciumcarbonat, Siliziumdioxid, Silikat, Sulfat, Oxid oder Mischungen davon ausgewählt ist, und/oder
- der Sikkativ-Katalysator ein schwermetallbasierter Komplex, bevorzugt ein eisenbasierter Komplex ist; und/oder
- das Schichtsilikat ein Dreischichtsilikat oder ein Gemisch ist, das ein Dreischichtsilikat aufweist, wobei das Dreischichtsilikat bevorzugt aus Montmorillonit und Hectorit ausgewählt ist und das Gemisch bevorzugt aus Bentoniten und Smektiten ausgewählt ist; und/oder
- das Ester- und/oder Paraffinwachs einen Tropfpunkt im Bereich von 65 bis 90 °C, bevorzugt 70 bis 80 °C aufweist, wobei das Esterwachs bevorzugt ein Sonnenblumenwachs ist.

5. Verwendung eines Korrosionsschutzmittels nach zumindest einem der Ansprüche 1 bis 4 zur Hohlraumkonservierung eines Bauteils, wobei die rheologischen Eigenschaften des Korrosionsschutzmittels in Abhängigkeit einer Applikationstemperatur und einer Bauteiltemperatur durch die vorbestimmbaren/vorbestimmten Anteile des Schichtsilikats und des Ester- und/oder Paraffinwachses eingestellt werden.

## Claims

1. A corrosion protection agent for the preservation of cavities, which has a basic composition of
40 to 50 weight per cent of base fluid,
3 to 10 weight per cent of alkyd resin,
10 to 20 weight per cent of sulphonate and/or salicylate component,
15 to 25 weight per cent of filler,
0.003 to 0.007 weight per cent of siccative catalyst,
each in relation to the total mass of the corrosion protection agent,
and which, in order to adjust the rheologic properties of the corrosion protection agent, furthermore has
1 to 5 weight per cent of sheet silicate
and/or
1 to 8 weight per cent of ester wax and/or paraffin wax,
each in relation to the total mass of the corrosion protection agent
wherein the corrosion protection agent does not have any aminic corrosion protection or binding agent components nor any anti-skin agent.

2. The corrosion protection agent in accordance with Claim 1,
**characterised in that**
the basic composition furthermore has
0.5 to 5 weight per cent, preferably 1 to 3 weight per cent, of an alkaline acid scavenger component which is selected from a group consisting of alkaline and alkaline earth salts, preferably the phosphates, carbonates, silicates, hydroxides, oxides and sulphonates thereof, preferably overbased sulphonates, as well as zirconium phosphate and zinc oxide, wherein zinc oxide is preferred, and/or
0.1 to 5 weight per cent, preferably 0.5 to 2.5 weight per cent, of odour scavenging component which is selected from adsorbents for aldehydes comprising zeolites and reactive components for the conversion of aldehydes comprising amides, and/or
0.001 to 0.05 weight per cent, preferably 0.01 weight per cent of an colourant additive, preferably a fluorescent colourant additive,
each in relation to the total mass of the corrosion protection agent.

3. The corrosion protection agent in accordance with Claim 1 or 2,
**characterised in that**
depending on the content of sheet silicate, the corrosion protection agent has at least one polar swelling agent component with at least one carbonyl and/or hydroxyl group, wherein the polar swelling agent component is selected from a group consisting of water, short-chain alcohols, preferably methanol, ethanol, esters, preferably propylene carbonate, and ketones, preferably acetone, as well as mixtures thereof, wherein a content of the at least one polar swelling agent component is within a range of 10 to 30 weight per cent, preferably within a range of 17 to 23 weight per cent, in relation to the mass of the sheet silicate, and wherein, with particular preference, the corrosion protection agent has, depending on the content of sheet silicate 0.019 to 1.33 weight per cent, preferably 0.19 to 0.95 weight per cent, of swelling agent component, preferably propylene carbonate, and
0.005 to 0.07 weight per cent, preferably 0.01 to 0.05 weight per cent of water, each in relation to the total mass of the corrosion protection agent.

4. The corrosion protection agent in accordance with at least one of Claims 1 to 3, **characterised in that**
- the base fluid is a non-polar solvent, preferably a group II, group III or group IV base oil having a kinematic viscosity (40 °C) within a range of 5 to 40 mm²/s, preferably of 10 to 30 mm²/s, or a polar solvent which is selected from a group consisting of water, methanol, ethanol, other short-chain alcohols, acetone, as well as mixtures thereof, and/or
- the alkyd resin is a low-odour and low-emission, low viscosity, non-water-mixable and air-drying alkyd resin which, preferably, is a long-oil alkyd resin and has a non-volatile content of at least 90 % and a dynamic viscosity (20 °C) of 500 to 12,000 mPas, preferably of 1,000 to 6,000 mPas, and/or
- the sulphonate and/or salicylate component is selected from a group consisting of overbased calcium sulphonate, overbased magnesium sulphonate and overbased calcium salicylate and mixtures thereof, wherein thixotropic overbased calcium sulphonate is preferred, and/or
- the filler is selected from a group consisting of carbonate, preferably calcium carbonate, silicone dioxide, silicate, sulphate, oxide or mixtures thereof, and/or
- the siccative catalyst is a heavy-metal-based complex, preferably an iron-based complex, and/or
- the sheet silicate is a three-sheet silicatoe or a mixture having a three-sheet silicate, wherein the three-sheet silicate is preferably selected from montmorillonite and hectorite and the mixture is preferably selected from bentonites and smectites, and/or
- the ester and/or paraffin wax has a dropping point within a range of 65 to 90 °C, preferably of 70 to 80 °C, wherein the ester wax preferably is a sunflower wax.

5. A use of a corrosion protection agent in accordance with at least one of Claims 1 to 4 for the preservation of cavities of a component, wherein the rheologic properties of the corrosion protection agent are adjusted subject to an application temperature and a component temperature by means of the predeterminable/predetermined contents of the sheet silicate and the ester and/or paraffin wax.

## Revendications

1. Agent anticorrosion pour la conservation de cavités, lequel présente une composition de base de
40 à 50 % en poids de fluide de base,
3 à 10 % en poids de résine alkyde,
10 à 20 % en poids de composant sulfonate et/ou salicylate,
15 à 25 % en poids d'agent de remplissage,
0,003 à 0,007 % en poids de catalyseur siccatif,
respectivement par rapport à la masse totale de l'agent anticorrosion,
et lequel présente en outre, pour la définition des propriétés rhéologiques de l'agent anticorrosion,
1 à 5 % en poids de phyllosilicate
et/ou
1 à 8 % en poids de cire d'ester et/ou cire de paraffine,
respectivement par rapport à la masse totale de l'agent anticorrosion,
l'agent anticorrosion ne présentant pas de composants anticorrosion ou liants aminiques, ni d'agent anti-peau.

2. Agent anticorrosion conformément à la revendication 1,
**caractérisé en ce que**
la composition de base présente en outre
0,5 à 5 % en poids, préférablement 1 à 3 % en poids, de composant capteur d'acide alcalin, sélectionné dans un groupe qui présente des sels alcalins et alcalino-terreux,
préférablement leurs phosphates, carbonates, silicates, hydroxydes, oxydes et sulfonates, préférablement des sulfonates surbasiques ainsi que le phosphate de zirconium et l'oxyde de zinc, l'oxyde de zinc étant à privilégier, et/ou
0,1 à 5 % en poids, préférablement 0,5 à 2,5 % en poids, de composant capteur d'odeur, sélectionné parmi des agents d'adsorption pour aldéhydes, comprenant des zéolithes et des composants réactifs pour la mise en œuvre d'aldéhydes, comprenant des amides et/ou présente
0,001 à 0,05 % en poids, préférablement 0,01 % en poids, d'additif pour colorant, préférablement un additif pour colorant fluorescent,
respectivement par rapport à la masse totale de l'agent anticorrosion.

3. Agent anticorrosion conformément à la revendication 1 ou 2,
**caractérisé en ce que**
l'agent anticorrosion présente, en fonction du taux de phyllosilicate, au moins un composant agent gonflant polaire avec au moins un groupe carbonyle et/ou hydroxyle, le composant agent gonflant polaire étant sélectionné dans un groupe qui présente l'eau, des alcools à chaîne courte, préférablement le méthanol, l'éthanol, l'ester, préférablement le carbonate de propylène, et des cétones, préférablement l'acétone, ainsi que des mélanges de ceux-ci, un taux au moins d'un composant agent gonflant polaire étant de l'ordre de 10 à 30 % en poids, préférablement de l'ordre de 17 à 23 % en poids, par rapport à la masse du phyllosilicate et plus préférablement l'agent anticorrosion présentant, en fonction du taux de phyllosilicate,
0,019 à 1,33 % en poids, préférablement 0,19 à 0,95 % en poids, de composant agent gonflant, préférablement de carbonate de propylène et
0,005 à 0,07 % en poids, préférablement 0,01 à 0,05 % en poids, d'eau, respectivement par rapport à la masse totale de l'agent anticorrosion.

4. Agent anticorrosion conformément au moins à la revendication 1 à 3,
**caractérisé en ce que**
- le fluide de base est un solvant non-polaire, préférablement une huile de base du groupe II, groupe III ou groupe IV avec une viscosité cinématique (40 °C) de l'ordre de 5 à 40 mm²/s, préférablement de 10 à 30 mm²/s, ou un solvant polaire qui est sélectionné dans un groupe comprenant l'eau, le méthanol, l'éthanol, d'autres alcools à chaîne courte, l'acétone et des mélanges de ceux-ci, et/ou
- la résine alkyde est une résine alkyde inodore et à faibles émissions, à faible viscosité, non miscible à l'eau et séchant à l'air, laquelle est préférablement longue en huile et présente une portion non-volatile d'au moins 98 % et une viscosité dynamique (20 °C) de 500 à 12 000 mPas, préférablement de 1000 à 6000 mPas, et/ou
- le composant sulfate et/ou salicylate est sélectionné dans un groupe comprenant le sulfonate de calcium surbasique, le sulfonate de magnésium surbasique et le salicylate de calcium surbasique et des mélanges de ceux-ci, le sulfonate de calcium surbasique thixotrope étant à privilégier, et/ou
- l'agent de remplissage est sélectionné dans un groupe comprenant le carbonate, préférablement le carbonate de calcium, le dioxyde de silicium, le silicate, le sulfate, l'oxyde ou des mélanges de ceux-ci,
et/ou
- le catalyseur siccatif est un complexe à base de métaux lourds, préférablement un complexe à base de fer, et/ou
- le phyllosilicate est un silicate à trois couches ou un mélange qui présente un silicate à trois couches, le silicate à trois couches étant préférablement sélectionné parmi la montmorillonite et l'hectorite et le mélange étant préférablement sélectionné parmi les bentonites et les smectites, et/ou
- la cire d'ester et/ou cire de paraffine présente un point de goutte de l'ordre de 65 à 90 °C, préférablement de 70 à 80 °C, la cire d'ester étant préférablement une cire de tournesol.

5. Utilisation d'un agent anticorrosion conformément au moins à l'une des revendications 1 à 4 pour la conservation de cavités d'une pièce, les propriétés rhéologiques de l'agent anticorrosion étant définies en fonction d'une température d'application et d'une température de pièce par les taux prédéterminables/prédéterminés du phyllosilicate et de la cire d'ester et/ou cire de paraffine.
